(19) Europäisches Patentamt / European Patent Office / Office européen des brevets

(11) **EP 2 730 901 A2**

(12) **EUROPEAN PATENT APPLICATION**

(43) Date of publication:
**14.05.2014 Bulletin 2014/20**

(51) Int Cl.:
***G01J 3/26*** (2006.01)

(21) Application number: **13191760.1**

(22) Date of filing: **06.11.2013**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **08.11.2012 JP 2012246429**

(71) Applicant: **Yokogawa Electric Corporation
Tokyo 180-8750 (JP)**

(72) Inventors:
• **Iga, Mitsuhiro
Musashino-shi, Tokyo 180-8750 (JP)**
• **Tanaami, Takeo
Musashino-shi, Tokyo 180-8750 (JP)**
• **Kakuryu, Nobuyuki
Musashino-shi, Tokyo 180-8750 (JP)**

(74) Representative: **Stöckeler, Ferdinand et al
Schoppe, Zimmermann, Stöckeler, Zinkler &
Partner
Patentanwälte
Postfach 246
82043 Pullach bei München (DE)**

(54) **Spectroscopic apparatus and spectroscopic light source**

(57)     A spectroscopic apparatus includes an optical system configured to transmit output light from a sample (1) irradiated with irradiation light from a light source (OS), a two-dimensional array light detector (2) configured to photograph light transmitted through the optical system, and a control unit (6). The optical system include a first optical device (3) disposed between the sample and the two-dimensional array light detector, a second optical device (4) disposed between the two-dimensional array light detector and the first optical device, and a variable band-pass filter (5, 7) disposed in at least one of spaces between the first optical device and the sample and between the second optical device and the two-dimensional array light detector. The control unit changes a light transmission wavelength band of the variable band-pass filter in accordance with a photographing timing of the two-dimensional array light detector.

FIG. 1

EP 2 730 901 A2

## Description

CROSS-REFERENCE TO RELATED APPLICATION

This application claims priority from Japanese Patent Application No. 2012-246429 filed with the Japan Patent Office on Nov. 8, 2012, the entire content of which is hereby incorporated by reference.

BACKGROUND

1. Technical Field

This disclosure relates to a spectroscopic apparatus and a spectroscopic light source.

2. Related Art

The irradiation on a sample (measurement object) with light from a light source such as an excitation laser source generates output light that includes excitation light, fluorescent light, Raman scattered light, and the like. A spectroscopic apparatus, which has been proposed, makes such output light incident on a microscope and then subjects the light to a spectroscopic analysis. The spectroscopic apparatus can be provided as a light wavelength meter having a simplified reference light source portion while retaining the stability of wavelength measurement. In other words, the light wavelength meter with high reliability can be devised at low cost.

Here, Raman scattering refers to a linear or nonlinear optical phenomenon generated by irradiating a substance with light having a single wavelength such as laser. Raman scattering generates scattered light having a wavelength slightly shifted (toward a longer-wavelength side and a shorter-wavelength side) from the single wavelength of the delivered light. The intensity of the light obtained by Raman scattering is very low, which is approximately $10^{-14}$ times that of the wavelength of the irradiation light.

The Raman scattered light spectrum obtained by the wavelength shift (Raman shift) is peculiar to each substance. The material of the sample can be therefore specified based on the Raman scattered light.

In view of this, the detection of the Raman scattered light or the like generated from the sample with the use of a spectroscopic apparatus has conventionally been utilized to identify the chemical structure and the physical state of the material included in the sample. Note that with the use of the conventional spectroscopic apparatus, nondestructive detection can be performed regardless of whether the sample is solid, liquid, or gas.

SERS refers to a phenomenon in which intensified Raman scattered light is generated by irradiating a sample having a material existing around a nanometer-size metal structure (measurement target: a sample with a metal nanostructure) with light having a single wavelength such as laser. Specifically, the irradiation of the sample having the metal nanostructure with excitation light makes surface plasmon, which is the compression wave of a free electron, excited on the metal surface. In a region where the surface plasmon is excited, the optical electric field is intensified.

In the conventional spectroscopic apparatus, in the case of SERS, the Raman scattered light generated around the metal nanostructure and intensified by the surface plasmon is measured. In this field, a spectroscopic apparatus using a diffraction grating as disclosed in JP-A-2002-014043 has been applied. The use of the diffraction grating, however, requires a number of components in the spectroscopic apparatus. Therefore, when the spectroscopic apparatus is increased in size, the cost becomes higher. Further, a liquid crystal band-pass filter has polarization dependence and its light transmission efficiency is low. Therefore, a spectroscopic apparatus including a variable band-pass filter has been suggested.

Conventional spectroscopic apparatus are disclosed in, for example, JP-A-2007-179002, JP-A-2004-317676, JP-A-2002-014043, JP-A-2011-220700, and JP-A-2012-127855.

SUMMARY

A spectroscopic apparatus includes an optical system configured to transmit output light from a sample irradiated with irradiation light from a light source, a two-dimensional array light detector configured to photograph light transmitted through the optical system, and a control unit. The optical system includes a first optical device disposed between the sample and the two-dimensional array light detector, a second optical device disposed between the two-dimensional array light detector and the first optical device, and a variable band-pass filter disposed in at least one of spaces between the first optical device and the sample and between the second optical device and the two-dimensional array light detector. The control unit changes a light transmission wavelength band of the variable band-pass filter in accordance with a photographing timing of the two-dimensional array light detector.

BRIEF DESCRIPTION OF DRAWINGS

FIG. 1 is a diagram illustrating the configuration of a spectroscopic apparatus according to an embodiment of the present disclosure;
FIG. 2 is a diagram illustrating an incidence angle of a variable band-pass filter;
FIG. 3 is a schematic diagram illustrating the spectral intensity on a photo-receiving surface of a two-dimensional array light detector of FIG. 1;
FIG. 4 is a diagram illustrating a transmission wavelength band of the variable band-pass filter;
FIG. 5 is a timing chart illustrating the operation of the two-dimensional array light detector and the variable band-pass filter;

FIG. 6 is a flowchart illustrating the operation of the spectroscopic apparatus of FIG. 1;

FIG. 7 is another timing chart illustrating the operation of the two-dimensional array light detector and the variable band-pass filter;

FIG. 8 is a diagram illustrating the configuration of a spectroscopic apparatus according to another embodiment of the present disclosure;

FIG. 9 is a diagram illustrating a transmission wavelength band of the variable band-pass filters;

FIG. 10 is a timing chart illustrating the operation of the two-dimensional array light detector and the variable band-pass filters;

FIG. 11 is a flowchart illustrating the operation of the spectroscopic apparatus of FIG. 8;

FIG. 12 is another timing chart illustrating the operation of the two-dimensional array light detector and the variable band-pass filters;

FIG. 13 is a diagram illustrating the configuration of a spectroscopic apparatus according to another embodiment of the present disclosure;

FIG. 14 is a diagram illustrating the optical axis shift correction of FIG. 13;

FIG. 15 is a diagram illustrating the configuration of a spectroscopic apparatus according to another embodiment of the present disclosure;

FIG. 16 is a diagram illustrating the optical axis shift correction of FIG. 15;

FIGS. 17A and 17B are diagrams illustrating the configuration of a spectroscopic apparatus according to another embodiment of the present disclosure;

FIG. 18 is a diagram illustrating the light dispersion operation based on the present disclosure;

FIG. 19 is a block diagram illustrating a specific example of a correction device;

FIG. 20 is a diagram illustrating the configuration of a spectroscopic apparatus according to another embodiment of the present disclosure;

FIG. 21 is a diagram illustrating the angle change of the filter of FIG. 20;

FIGS. 22A and 22B are diagrams illustrating the configuration of a rotation mechanism for achieving the rotation operation of the filter illustrated in FIG. 21;

FIG. 23 is a diagram illustrating the configuration of a spectroscopic apparatus according to another embodiment of the present disclosure;

FIG. 24 is a diagram illustrating the configuration of a spectroscopic apparatus according to another embodiment of the present disclosure;

FIG. 25 is a diagram illustrating the configuration of a narrow-band light source as an application example of the present disclosure;

FIG. 26 is a diagram illustrating the configuration of an example of a spectroscopic apparatus according to another embodiment of the present disclosure;

FIG. 27 is a diagram illustrating a light incidence angle of the variable band-pass filter of FIG. 26; and

FIG. 28 is a schematic diagram illustrating the spectral intensity on a photo-receiving surface of the two-dimensional array light detector of FIG. 26.

DETAILED DESCRIPTION

In the following detailed description, for purpose of explanation, numerous specific details are set forth in order to provide a thorough understanding of the disclosed embodiments. It will be apparent, however, that one or more embodiments may be practiced without these specific details. In other instances, well-known structures and devices are schematically shown in order to simplify the drawing.

A spectroscopic apparatus according to an embodiment of this disclosure includes an optical system configured to transmit output light from a sample irradiated with irradiation light from a light source, a two-dimensional array light detector configured to photograph light transmitted through the optical system, and a control unit. The optical system includes a first optical device disposed between the sample and the two-dimensional array light detector, a second optical device disposed between the two-dimensional array light detector and the first optical device, and a variable band-pass filter disposed in at least one of spaces between the first optical device and the sample and between the second optical device and the two-dimensional array light detector. The control unit changes a light transmission wavelength band of the variable band-pass filter in accordance with a photographing timing of the two-dimensional array light detector.

In the spectroscopic apparatus, the control unit may control the variable band-pass filter to sweep a predetermined plurality of the transmission wavelength bands.

In the spectroscopic apparatus, the control unit may photograph the output light at predetermined time intervals by controlling the photographing timing of the two-dimensional array light detector, and control the variable band-pass filter to change the transmission wavelength band into a wavelength band having predetermined intervals.

The spectroscopic apparatus may further include a polarizer configured to polarize light transmitted through the variable band-pass filter in a predetermined polarizing direction. The control unit may change the polarizing direction of the polarizer.

The spectroscopic apparatus may further include an optical axis adjusting device configured to correct displacement of an optical axis of the output light from the sample in a two-dimensional plane.

In the spectroscopic apparatus, the variable band-pass filter may include a plurality of filters having different transmission wavelength bands, and a supporting member that can change the filters and that rotatably supports the filters relative to the optical axis may be further provided.

In the spectroscopic apparatus, the support member may be a rotatably formed circular-plate-like filter wheel, and the filter may be supported by the filter wheel and intersects with the optical axis at a predetermined rotation position.

In the spectroscopic apparatus, the support member may be a slider that is movable along a straight line intersecting with the optical axis.

The spectroscopic apparatus may further include a rotor configured to rotate the entire supporting member relative to the optical axis.

In this spectroscopic apparatus, the optical system may be able to be coupled or integrated with an optical system such as a microscope or telescope.

In the spectroscopic apparatus, the variable band-pass filter may be formed to change the transmission wavelength band depending on an incidence angle to the optical axis.

In the spectroscopic apparatus, the first optical device and the second optical device may constitute a telecentric optical system.

A spectroscopic light source according to an embodiment of this disclosure includes the spectroscopic apparatus and a light source configured to irradiate the sample with light.

With the use of this spectroscopic apparatus, the spectroscopic output with unevenness in light spectral intensity reduced can be obtained in a wider wavelength range from an observation surface area.

The spectroscopic apparatus can substantially function as a narrow-band light source by having a light source for irradiating a sample with light.

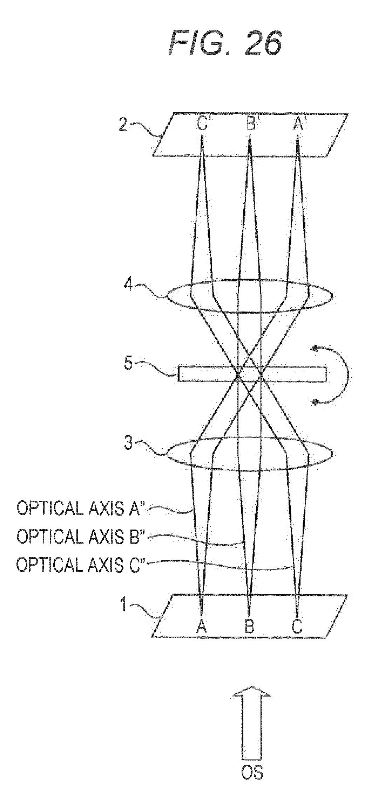

FIG. 26 is a structure explanatory diagram illustrating an example of a spectroscopic apparatus including a variable band-pass filter according to an embodiment of the present disclosure. In FIG. 26, optical units 3 and 4 are disposed between a sample 1 and a detector 2. The optical units 3 and 4 constitute a telecentric optical system for providing parallel light.

A variable band-pass filter 5 for transmitting only light of a particular region is provided between the optical units 3 and 4.

Therefore, light rays from points A, B, and C of the sample 1, which are generated by irradiating the sample 1 with light from a light source OS, transmit through the optical unit 3 along optical axes A", B", and C", respectively. The variable band-pass filter 5 restricts the light transmission wavelength band of these light rays. These light rays are focused on points A', B', and C' of the detector 2 by the optical unit 4, respectively.

In this structure, the light transmission wavelength band (wavelength region) of the variable band-pass filter 5 changes depending on the light incidence angle to the variable band-pass filter 5. This is because, if the variable band-pass filter is a multilayer filter, the change in incidence angle leads to the apparent change in film thickness.

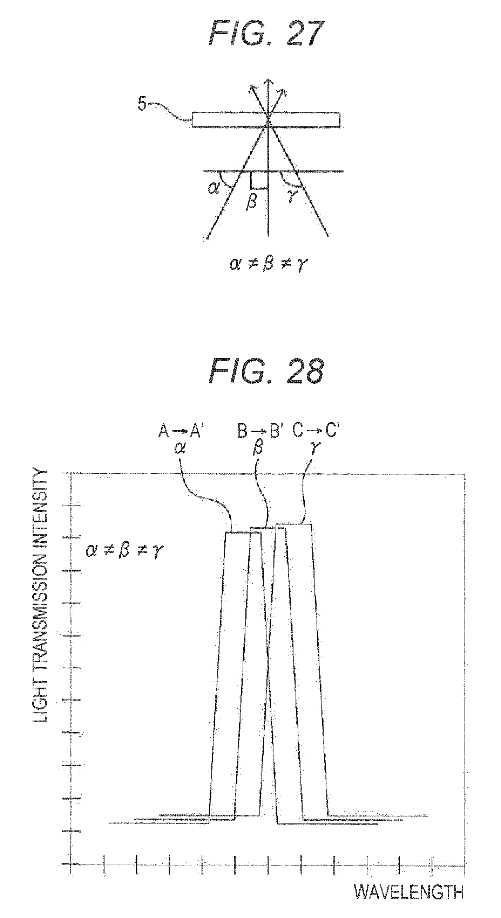

The light rays of the optical axes A", B", and C" of FIG. 26 enter the variable band-pass filter 5 at angles of $\alpha$, $\beta$, and $\gamma$, respectively as illustrated in FIG. 27.

As a result, the spectra and intensities of the transmission light focused on the points A', B', and C' of the detector 2 are different between the points of A→A', B→B', and C→C' as illustrated in FIG. 28.

In other words, even though the light has light spectrum with uniform intensity (i.e., having constant light intensity without wavelength dependency) at the points A, B, and C of the sample 1, the incidence angle to the variable band-pass filter 5 is different as illustrated in FIG. 27. Therefore, the light transmission spectrum is different at the points A', B', and C' of the detector 2.

Accordingly, in the case of obtaining the light with a certain particular wavelength from the surface of the sample 1, the unevenness of the light transmission spectrum is caused in accordance with the surface area of the detector 2.

Hence, a small, inexpensive, spectroscopic apparatus having high light efficiency and fewer components by the use of a variable band-pass filter is hereinafter disclosed. Further, a spectroscopic apparatus providing spectroscopic output with unevenness of light spectral intensity reduced in a wide wavelength range in the surface area is disclosed.

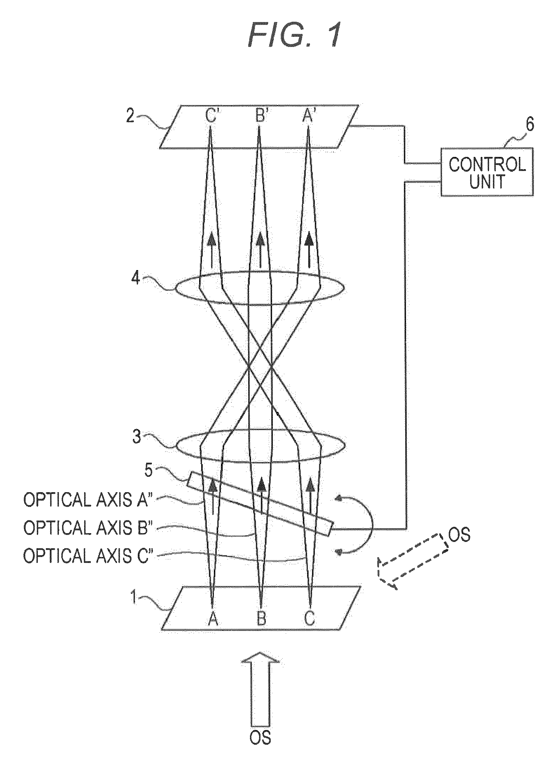

FIG. 1 is a diagram illustrating the configuration of an embodiment of a spectroscopic apparatus according to an embodiment of the present disclosure. The parts in FIG. 1 common to those in FIG. 26 are denoted by the same reference symbols. FIG. 1 and FIG. 26 are different in the position of the variable band-pass filter 5. In other words, the variable band-pass filter 5 of FIG. 1 is disposed between the sample 1 and the optical unit 3.

In FIG. 1, the light source OS is a light source emitting light with a wide band such as an incandescent light source, which is not shown, or a light source emitting light with a single wavelength such as a laser. The sample 1 generates output light including fluorescent light and scattered light by being irradiated with excitation light from the light source OS.

The output light generated by the sample 1 enters the two-dimensional array light detector 2 through the two optical units, i.e., the optical unit 3 (first optical device) and the optical unit 4 (second optical device). Each of the optical units 3 and 4 is formed by a lens. A lens optical system including the optical unit 3 and the optical unit 4 is provided for a microscope, which is not shown, or constitutes a part of an optical system added thereto later. The lens optical system forms an image with the output light from the sample 1 at the two-dimensional array light detector 2. Note that the lens optical system is not limited to the structure including the two optical units.

The two-dimensional array light detector 2 is an image sensor such as a CMOS (Complementary Metal Oxide Semiconductor) or a CCD (Charge Coupled Device).

Between the sample 1 and the optical unit 3 is provided the variable band-pass filter 5. This variable band-pass filter 5 has a variable wavelength band for transmitting incident light. The variable band-pass filter 5 is formed to transmit light with a predetermined wavelength band out of the output light of the parallel beam coming from the optical unit 4. The variable band-pass filter may be, for example, a light incidence angle tunable type.

The two-dimensional array light detector 2 and the variable band-pass filter 5 are electrically connected to a control unit (controller) 6. The photographing timing of the two-dimensional array light detector 2 is changed (controlled) by a control signal from the control unit 6. The light transmission wavelength band of the variable band-pass filter 5 is changed (controlled) based on a control signal from the control unit 6 in accordance with the photographing timing of the two-dimensional array light detector 2.

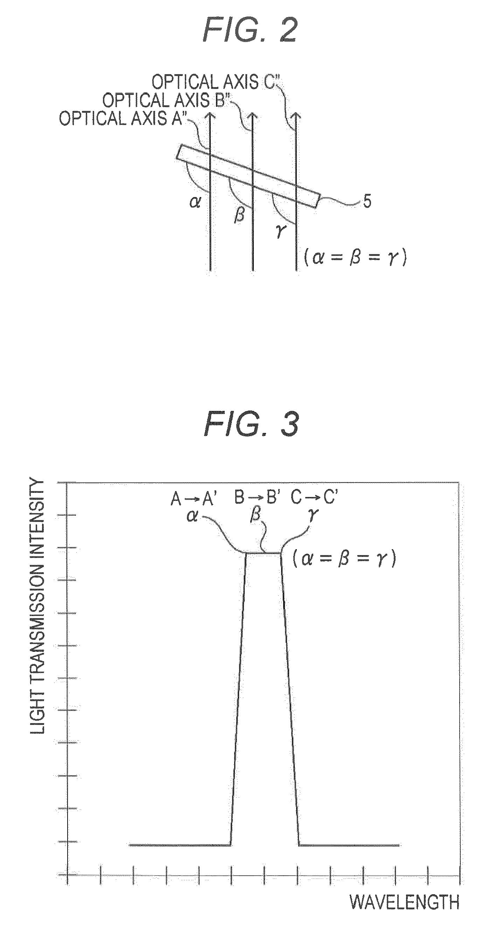

Here, the sample 1 is installed approximately perpendicular to the optical axis of the optical unit 3. The output light from the sample 1 travels upward in FIG. 1, i.e., in approximately parallel to the optical axis of the optical unit 3. The output light traveling from the sample 1 toward the optical unit 3 enters the variable band-pass filter 5 in a manner that the optical axes A", B", and C" of the output light have approximately the same incidence angle $\alpha = \beta = \gamma$ as illustrated in FIG. 2.

In other words, the output light from any region on the surface of the sample 1 enters the variable band-pass filter 5 at approximately the same incidence angle. Therefore, the light transmission wavelength band by the variable band-pass filter 5 becomes equal at all the focal points A', B', and C' on the photo-receiving surface of the two-dimensional array light detector 2.

In other words, in the spectroscopic apparatus of FIG. 1, in the case of obtaining the light with a certain particular wavelength out of the output light from the surface of the sample 1, the light can be dispersed while the unevenness of the light transmission wavelength band in accordance with the position or the region of the output light on the surface of the sample 1 is reduced as shown in FIG. 3.

FIG. 3 is a schematic diagram illustrating the spectral intensity on the photo-receiving surface of the two-dimensional array light detector 2 of FIG. 1. In FIG. 3, the vertical axis represents the light transmission intensity while the horizontal axis represents the wavelength. If the light from the points A, B, and C on the sample 1 toward the two-dimensional array light detector 2 has uniform intensity and has no wavelength dependency, the light transmission spectrum at each of the focal points A', B', and C' on the photo-receiving surface of the two-dimensional array light detector 2 becomes approximately equal to each other.

The light transmission wavelength band of the variable band-pass filter 5 is variable. The variable band-pass filter 5 transmits light with a predetermined wavelength band width W out of the parallel beam emitted from the sample 1. Specifically, the variable band-pass filter 5 includes, for example, a filter part where the wavelength characteristic of the transmission light changes depending on the change in incidence angle on the filter surface, and a rotation table for changing the angle of the filter. In other words, the variable band-pass filter 5 is formed to change the transmission wavelength band depending on the incidence angle relative to the optical axis.

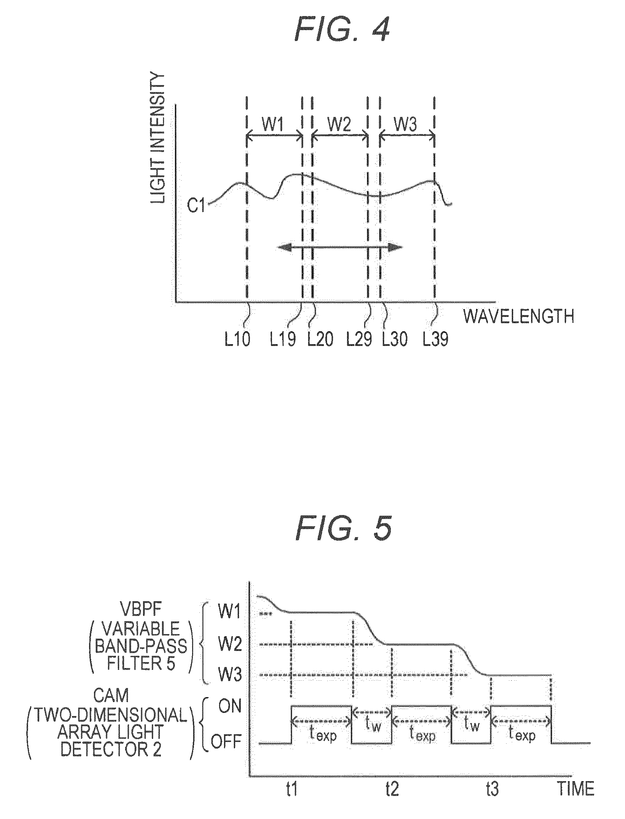

FIG. 4 is a diagram illustrating the light transmission wavelength band of the variable band-pass filter 5 of FIG. 1. As illustrated in FIG. 4, by changing the angle of the filter part relative to the optical axis of the output light, the variable band-pass filter 5 can adjust (change) the light transmission wavelength band while the predetermined wavelength band width W is maintained.

For example, as illustrated in FIG. 4, the variable band-pass filter 5 can switch the light transmission wavelength band among the following three kinds: a wavelength band W1 from wavelengths L10 to L19, a wavelength band W2 from wavelengths L20 to L29, and a wavelength band W3 from wavelengths L30 to L39. The variable band-pass filter 5 can transmit scattered light C1 included in the output light from the sample 1 emitted from the optical unit 4 at any of the wavelength bands W1 to W3. Any of the wavelength bands W1 to W3 has the predetermined wavelength band width W.

As aforementioned, the control unit 6 controls the two-dimensional array light detector 2 and the variable band-pass filter 5 to allow the two-dimensional array light detector 2 to photograph at a predetermined timing, the output light with the predetermined light transmission wavelength band of the variable band-pass filter 5. The control unit 6 controls the two-dimensional array light detector 2 and the variable band-pass filter 5 to allow the two-dimensional array light detector 2 and the variable band-pass filter 5 to operate in cooperation.

The control unit 6 may photograph the output light from the sample 1 at predetermined time intervals (for example, equal time intervals) by controlling the two-dimensional array light detector 2. The control unit 6 may control the variable band-pass filter 5 to change the light transmission wavelength band at predetermined wavelength band intervals (for example, equal wavelength band intervals).

FIG. 5 is a timing chart illustrating the operation of the two-dimensional array light detector 2 and the variable band-pass filter 5 controlled by the control unit 6. The upper stage of FIG. 5 represents the change in wavelength band of the light transmitting through a VBPF (variable band-pass filter 5). In the case where the light transmission wavelength band is maintained at W1, W2, or W3, the VBPF remains the same. The light transmission wavelength band is changed (for example, W1→W2 or W2→W3) by the acceleration or deceleration of the variable band-pass filter 5. The lower stage of FIG. 5 represents the timing at which the output light is photographed by a CAM (two-dimensional array light detector 2). The two-dimensional array light detector 2 conducts the photographing and the exposure in a predetermined exposure time of $T_{exp}$ when in an ON state. When the light transmission wavelength band is changed by the acceleration or deceleration of the VBPF, a standby time $T_w$ for the next photographing is generated.

A storage unit, which is not shown, stores a predetermined photographing timing at which the two-dimensional array light detector 2 is turned on, or predetermined photographing intervals. The control unit 6 controls the variable band-pass filter 5 to change the wavelength band among W1, W2, and W3 in accordance with this photographing timing or photographing intervals. Specifically, the control unit 6 changes the wavelength band among W1, W2, and W3 of the variable band-pass filter 5 in accordance with a photographing timing t1, t2, or t3 of the two-dimensional array light detector 2.

Note that the control unit 6 may include a CPU (Central Processing Unit) for controlling the operation of each component of the spectroscopic apparatus. Specifically, the control unit 6 activates, for example, the operating system stored in the storage unit, which is not shown. The control unit 6 controls the entire spectroscopic apparatus by reading out a program stored in the storage unit and executing the program on the operating system. The control unit 6 controls the variable band-pass filter 5 at the predetermined timing or the predetermined photographing intervals to change the light transmission wavelength band. Thus, the two-dimensional array light detector 2 photographs the transmission light.

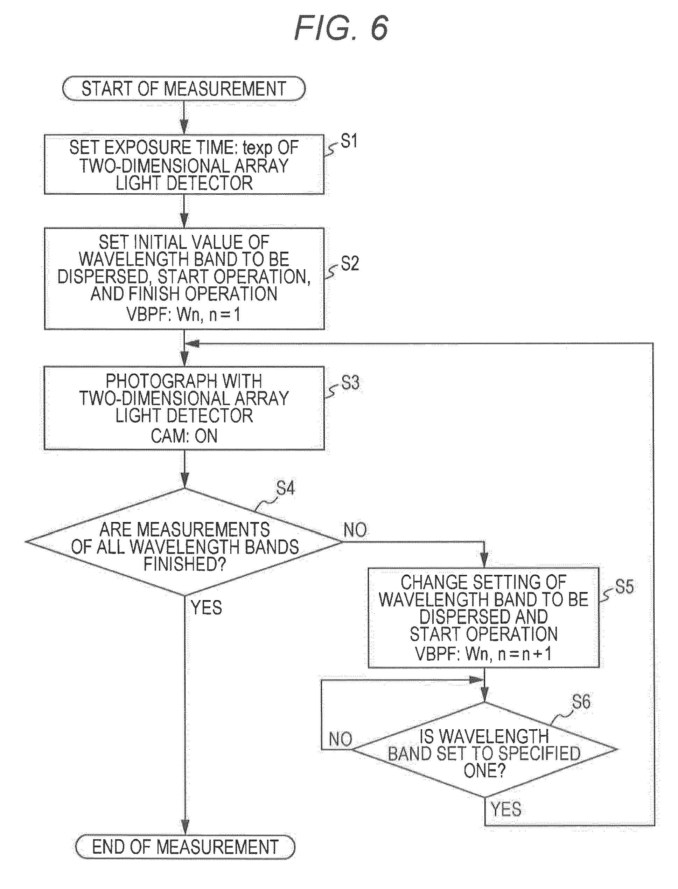

FIG. 6 is a flowchart illustrating the operation of the spectroscopic apparatus structured as illustrated in FIG. 1.

(1-1) After the start of the measurement, in Step S1, the control unit 6 reads in the predetermined exposure time $T_{exp}$ of the two-dimensional array light detector 2 from the storage unit, which is not shown, and sets the predetermined exposure time $T_{exp}$.

(1-2) In Step S2, the control unit 6 reads in all the predetermined light transmission wavelength bands in the VBPF from the storage unit, which is not shown, and sets the initial value (W1). In other words, after the VBPF is operated and it is confirmed that the wavelength band of the VBPF has become W1, the control unit 6 finishes the operation of the VBPF and makes the VBPF rest.

(1-3) In Step S3, the control unit 6 controls the two-dimensional array light detector 2 and photographs the light transmitted through the VBPF in the predetermined exposure time $T_{exp}$ (CAM: ON). The control unit 6 stores the obtained photographed data in the storage unit, which is not shown.

(1-4) In Step S4, the control unit 6 determines whether the measurement (photographing) has been finished in all the spectrum wavelength bands. If the measurement has been finished (YES), the control unit 6 returns to the standby state where the control unit 6 waits for the next measurement after finishing the measurement. If the measurement has not been finished (NO), the control unit 6 advances to Step S5.

(1-5) In Step S5, the control unit 6 sets the light transmission wavelength band in the VBPF to the next state (VBPF: W1→W2), and starts the acceleration or deceleration operation of the VBPF.

(1-6) In Step S6, the control unit 6 determines whether the light transmission wavelength band of the VBPF has reached the next wavelength band W2 set in Step S5. If the light transmission wavelength band of the VBPF has not reached the next wavelength band W2 (NO), the control unit 6 repeats the determination of Step S6. The repeated determination means that the wavelength band is in the middle of changing into the next wavelength band (W1→W2) by the acceleration or deceleration of the VBPF. The accumulative repeated time corresponds to the standby time Tw (CAM: OFF) until the two-dimensional array light detector 2 starts to photograph next time. If the light transmission wavelength band of the VBPF has reached the next wavelength band W2 (YES), the control unit 6 advances to Step S3 and photographs the transmission light of the wavelength band W2 by controlling the two-dimensional array light detector 2.

(1-7) The determination in Step S4, the operation in Step S5, the determination in Step S6, and the photographing in Step S3 as above are repeated. Thus, the control unit 6 finally controls the light transmission wavelength band in the VBPF to W3 (final state) and moreover controls the two-dimensional array light detector 2, thereby photographing the transmission light of the wavelength band W3. The control unit 6 finishes the measurement and returns to the standby state where the control unit 6 waits for the next measurement.

In the spectroscopic apparatus of FIG. 1, the variable band-pass filter 5 is disposed between the optical unit 3 and the sample 1. Thus, the output light from any region of the sample 1 enters the variable band-pass filter 5 at the approximately equal angle. Therefore, the light can be dispersed while the unevenness of the light transmission wavelength band in accordance with the position or region on the photo-receiving surface of the two-dimensional array light detector 2 is reduced.

Thus, the spectroscopic apparatus of FIG. 1 can provide the spectrum with reduced unevenness on the region of the two-dimensional observation surface of the sample 1. As a result, the spectroscopic apparatus of FIG. 1 can provide the spectrum at high speed because it is not necessary to correct the spectrum information of an image after the measurement.

Moreover, the two-dimensional array light detector 2 and the variable band-pass filter 5 operate in cooperation under the control of the control unit 6. Thus, the control unit 6 can photograph the spectroscopic images on the region of the two-dimensional surface at one time.

The spectroscopic apparatus of FIG. 1 includes a small number of components: the lens optical system including the two optical units 3 and 4, and the variable band-pass filter 5. Therefore, the small and inexpensive spectroscopic apparatus of FIG. 1 can be achieved.

As the variable band-pass filter 5, a light incidence angle tunable type filter having small polarization dependence may be used. In this case, even when the incidence light is weak, a sufficient amount of light can be obtained. Therefore, the exposure time $T_{exp}$ can be shortened. Thus, the spectrum can be obtained at high speed.

In the above embodiment, the variable band-pass filter 5 has the three light transmission wavelength bands W1, W2, and W3 for the convenience of the description. The variable band-pass filter 5 may alternatively be structured so that the output light including the fluorescent light, scattered light, reflected light, and transmitted light from the sample 1 can be transmitted at more light transmission wavelength bands. In this case, the control unit 6 controls the variable band-pass filter 5 to sweep the light transmission wavelength band. Thus, the spectra of the successive spectrum bands can be obtained.

In the spectroscopic apparatus of FIG. 1, the wavelength resolution band is the light transmission wavelength band of the variable band-pass filter 5. Therefore, the spectroscopic apparatus of FIG. 1 may employ the variable band-pass filter 5 with a narrow wavelength band width and moreover have more wavelength bands for transmitting light. This makes it possible for the spectroscopic apparatus to have high wavelength resolution and provide the spectra of the successive spectrum bands.

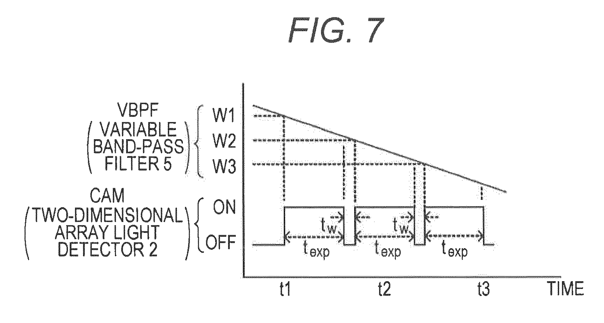

In this embodiment, for the convenience of the description, the light transmission wavelength band of the variable band-pass filter 5 is changed stepwise (dispersedly) in a manner of W1→W2→W3 as illustrated in FIG. 5. However, the change of the wavelength band from W1 to W3 may be continuous or curved. This operation is described with reference to FIG. 7.

FIG. 7 is a timing chart illustrating the operation of the two-dimensional array light detector 2 and the variable band-pass filter 5 which are controlled by the control unit 6. In FIG. 7, the control unit 6 continuously changes the filter part of the variable band-pass filter 5 for every predetermined angle. Thus, the control unit 6 continuously changes the light transmission wavelength band within the range from the wavelength band W1 to W3. FIG. 7 depicts the light transmission wavelength band which changes continuously and linearly. The control unit 6 may alternatively change the light transmission wavelength band non-linearly.

In the case where the continuous spectrum band is swept by continuously changing the light transmission wavelength band as illustrated in FIG. 7, the acceleration or deceleration of the variable band-pass filter 5 as illustrated in FIG. 5 is not necessary. Thus, the standby time $T_W$ can be shortened. That is, the photographing with the use of the two-dimensional array light detector 2 can be repeatedly performed. Therefore, the entire light dispersing time becomes shorter and the spectrum can be obtained at higher speed.

In this case, the control unit 6 may adjust the intervals between the adjacent wavelength bands of the variable band-pass filter for transmitting the light. Moreover, the control unit 6 may continuously change the light transmission wavelength band within the range from the wavelength band W1 to W3. For example, as for the range where the light intensity analysis of the transmission light obtained in the narrow wavelength band is performed, the control unit 6 may control the variable band-pass filter 5 to narrow the intervals of the adjacent wavelength bands. Moreover, as for the range where the light intensity analysis of the transmission light obtained in the narrow wavelength band is not necessary, the control unit 6 may increase the intervals between the adjacent wavelength bands.

As a result, the spectroscopic apparatus (control unit 6) can disperse the light with the continuous wavelength band in the desired range. In this range, the spectroscopic apparatus has an appropriate wavelength resolution in accordance with the wavelength region of the spectrum to be obtained. Moreover, since the continuous dispersing operation is achieved, the standby time $T_W$ of the acceleration or deceleration of the variable band-pass filter 5 can be omitted (shortened). As a result, the high-speed light dispersion can be performed as a whole.

The similar effect can also be obtained when the position of the variable band-pass filter 5 is changed from between the sample 1 and the optical unit 3 to between the optical unit 4 and the two-dimensional array light detector 2. For example, the optical system including the optical units 3 and 4 may be replaced by a telecentric optical system or the like. In other words, the optical units 3 and 4 may constitute the telecentric optical system. Thus, the output light from the sample 1 can enter the two-dimensional array light detector 2 in an approximately perpendicular manner. Accordingly, the spectroscopic apparatus in which the variable band-pass filter 5 is disposed between the optical unit 4 and the two-dimensional array light detector 2 operates in almost the same manner as the spectroscopic apparatus of FIG. 1; therefore, almost the same effect as that of the spectroscopic apparatus of FIG. 1 can be obtained.

The spectroscopic apparatus of this embodiment may have a plurality of variable band-pass filters operating in cooperation. In this structure, the light can be dispersed at high optical wavelength resolution relative to an overlapping portion between the adjacent wavelength bands.

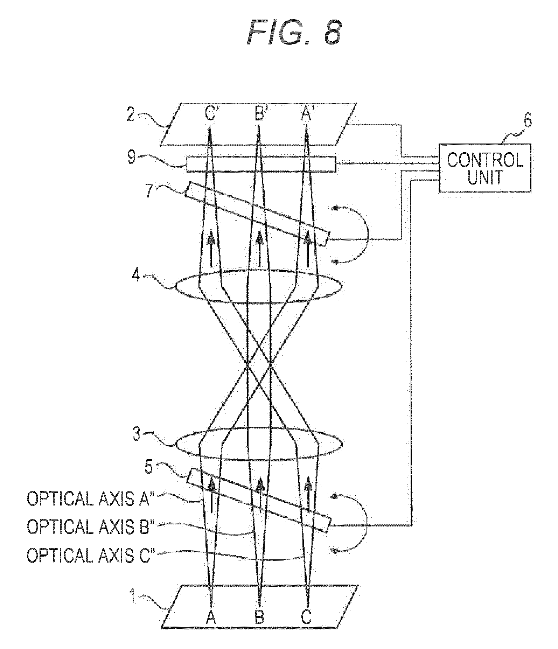

FIG. 8 is a diagram illustrating the configuration of a spectroscopic apparatus according to another embodiment of the present disclosure. The parts in FIG. 8 common to those in FIG. 1 are denoted by the same reference symbols. In the spectroscopic apparatus of FIG. 8, a variable band-pass filter 7 is also disposed between the optical unit 4 and the two-dimensional array light detector 2. The variable band-pass filter 7 has a structure similar to the variable band-pass filter 5. This variable band-pass filter 7 is also electrically connected to the control unit 6. The light transmission wavelength band of the variable band-pass filter 7 is changed (controlled) by a control signal of the control unit 6 in accordance with the photographing timing of the two-dimensional array light detector 2. Between the variable band-pass filter 7 and the two-dimensional array light detector 2 is provided, for example, a polarizing plate (polarizer) 9 including a half-wave plate or a quarter-wave plate. This polarizing plate 9 is also electrically connected to the control unit 6. The polarization direction of the polarizing plate 9 is changed (controlled) by the control unit 6.

By changing the filter angle relative to the optical axis, the variable band-pass filter 7 controls (changes) the light transmission wavelength band while the wavelength band width W capable of transmitting light is maintained. Here, the variable band-pass filter 7 has a wavelength band width W' capable of transmitting light, which is different from that of the variable band-pass filter 5, or a wavelength band width W capable of transmitting light, which is almost the same as that of the variable band-pass filter 5.

If the variable band-pass filter 7 has almost the same wavelength band width W as that of the variable band-pass filter 5, the variable band-pass filter 7 is controlled by the control unit 6 so as to have the light transmission wavelength band which is different from that of the variable band-pass filter 5.

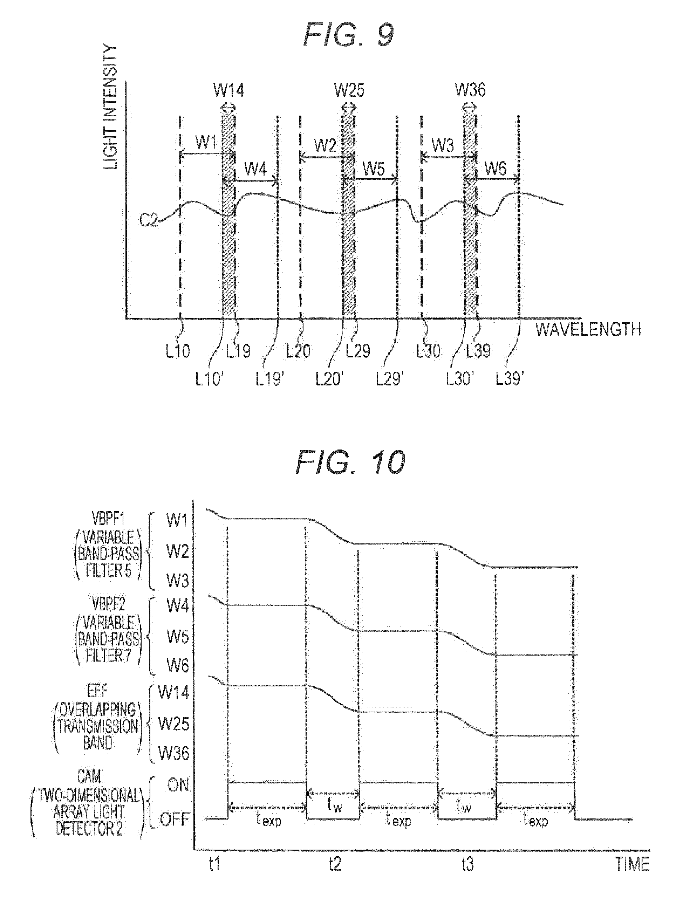

FIG. 9 is a diagram illustrating the light transmission wavelength bands of the variable band-pass filter 5 and the variable band-pass filter 7. In the example of FIG. 9, the variable band-pass filter 5 and the variable band-pass filter 7 have almost the same wavelength band width W capable of transmitting light. As described above, a change in filter angle relative to the optical axis allows both the variable band-pass filter 5 and the variable band-pass filter 7 to control the light transmission wavelength band while maintaining the wavelength band width W capable of transmitting light.

The light transmission wavelength band of the variable band-pass filter 5 can be changed among the three kinds of wavelength bands W1, W2, and W3 as described above. On the other hand, the variable band-pass filter 7 can change the light transmission wavelength band among the following three kinds: a wavelength band W4 from wavelengths L10' to L19', a wavelength band W5 from wavelengths L20' to L29', and a wavelength band W6 from wavelengths L30' to L39'. As illustrated in FIG. 9, the wavelength bands W1 and W4, the wavelength bands W2 and W5, and the wavelength bands W3 and W6 are adjacent to each other, and have the overlapping band.

In FIG. 9, the overlapping portion between the wavelength bands W1 and W4 is denoted by W14, the overlapping portion between the wavelength bands W2 and W5 is denoted by W25, and the overlapping portion between the wavelength bands W3 and W6 is denoted by W36. At the light transmission wavelength band, the light transmission wavelength band of the variable band-pass filter 5 is overlapped with that of the variable band-pass filter 7. Hereinafter, therefore, the light transmission wavelength band is referred to as "an overlapping transmission band".

The control unit 6 controls the variable band-pass filter 5 in accordance with the predetermined photographing intervals or the predetermined photographing timing where the two-dimensional array light detector 2 is turned on, that is stored in the storage unit, which is not shown. Thus, the control unit 6 changes the light transmission wavelength band of the variable band-pass filter 5 to W1, W2, or W3. Furthermore, the control unit 6 controls the variable band-pass filter 7 to change the light transmission wavelength band of the variable band-pass filter 7 to W4, W5, or W6.

FIG. 10 is a timing chart illustrating the operation of the two-dimensional array light detector 2, the variable band-pass filter 5, and the variable band-pass filter 7, which are controlled by the control unit 6.

In FIG. 10, the VBPF1 (variable band-pass filter 5) represents the change of the light transmission wavelength band of the variable band-pass filter 5 (W1→W2→W3) and the VBPF 2 (variable band-pass filter 7) represents the change of the light transmission wavelength band of the variable band-pass filter 7 (W4→W5→W6). EFF represents the change of the overlapping transmission wavelength band (W14→W25→W36). CAM represents the timing where the two-dimensional array light detector 2 photographs. The exposure and photographing are performed when the two-dimensional array light detector 2 is ON.

The storage unit stores the predetermined photographing intervals and/or the predetermined photographing timings t1, t2, and t3 where the two-dimensional array light detector 2 photographs when in the ON state. The control unit 6 changes the light transmission wavelength band of the variable band-pass filter 5 among W1, W2, and W3 in accordance with the timing or the photographing intervals. Further, the control unit 6 changes the light transmission wavelength band of the variable band-pass filter 7 among W4, W5, and W6. As a result, the overlapping transmission band becomes W14, W25, and W36 in accordance with the timings t1, t2, and t3 where the two-dimensional array light detector 2 photographs. Here, the overlapping transmission bands W14, W25, and W36 may have either approximately the same width or different width.

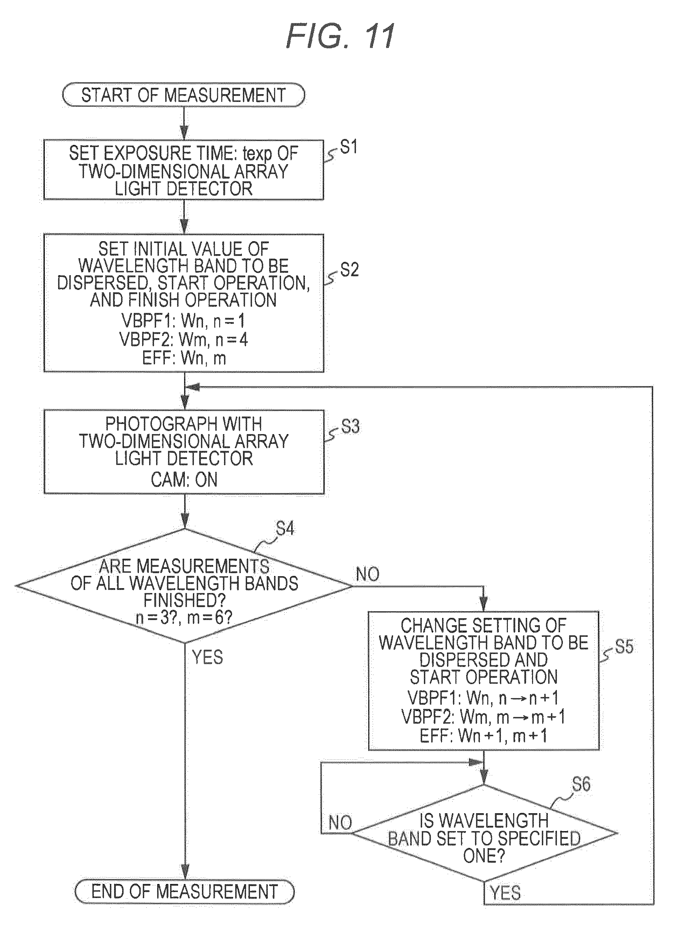

FIG. 11 is a flowchart illustrating the operation of the spectroscopic apparatus structured as illustrated in FIG. 8.

(2-1) After the start of the measurement, in Step S1, the control unit 6 reads in the predetermined exposure time $T_{exp}$ of the two-dimensional array light detector 2 from the storage unit, which is not shown, and sets the predetermined exposure time $T_{exp}$.

(2-2) In Step S2, the control unit 6 reads in all the predetermined light transmission wavelength bands (spectral wavelength band of the light transmission) in the variable band-pass filters 5 and 7 from the storage unit, which is not shown, and sets the initial values (VBPF1: W1, VBPF2: W4). In other words, after operating the variable band-pass filters 5 and 7, the control unit 6 sets the overlapping transmission band to the initial state (EFF: W14). After having confirmed this, the control unit 6 finishes the operation of the variable band-pass filters 5 and 7 and makes the variable band-pass filters 5 and 7 rest.

(2-3) In Step S3, the control unit 6 photographs in the predetermined exposure time $T_{exp}$ by controlling the two-dimensional array light detector 2 (CAM: ON). The control unit 6 stores the obtained photograph data in the storage unit, which is not shown.

(2-4) In Step S4, the control unit 6 determines whether the measurement (photographing) has been finished in all the spectrum wavelength bands. If the measurement has been finished (YES), the control unit 6 returns to the standby state where the control unit 6 waits for the next measurement after finishing the measurement. If the measurement has not been finished (NO), the control unit 6 advances to Step S5.

(2-5) In Step S5, the control unit 6 sets the light transmission wavelength bands of the variable band-pass filters 5 and 7 to the next state (VBPF1: W1→W2, VBPF2: W4→W5, EFF: W14→W25). Then, the control unit 6 starts the acceleration and deceleration of the variable band-pass filters 5 and 7.

(2-6) In Step S6, the control unit 6 determines whether the overlapping transmission band has reached the next overlapping transmission band (EFF: W25) set in Step S5 or not. If the overlapping transmission band has not reached (NO), the control unit 6 repeats the determination of Step S6. The repeated determination means that the overlapping transmission range is in the middle of changing into the next overlapping transmission band by the acceleration or deceleration of the variable band-pass filters 5 and 7. The accumulative repeated time corresponds to the standby time Tw (CAM: OFF) until the two-dimensional array light detector 2 starts to photograph next time. If the overlapping transmission band has reached W25 (YES), the control unit 6 advances to Step S3. The control unit 6 photographs by controlling the two-dimensional array light detector 2.

(2-7) The determination in Step S4, the operation in Step S5, the determination in Step S6, and the photographing in Step S3 as above are repeated. Thus, the control unit 6 finally controls the light transmission wavelength band in the variable band-pass filters 5 and 7 to be in the final state (VBPF1: W3, VBPF2: W6). Thus, the control unit 6 makes the overlapping transmission band be in the final state (EFF: W36). In addition to this, the control unit 6 photographs the transmission light by controlling the two-dimensional array light detector 2, and then finishes the measurement. The control unit 6 then returns to the standby state where the control unit 6 waits for the next measurement.

In this manner, the spectroscopic apparatus (control unit 6) has the two variable band-pass filters 5 and 7 operate in cooperation. As a result, the control unit 6 causes the output light including the fluorescent light, scattered light, reflected light, and transmitted light from the sample 1 to transmit over the entire (or a part of) predetermined wavelength band through the variable band-pass filters 5 and 7 for every overlapping transmission band. Thus, the light can be dispersed.

In the spectroscopic apparatus of FIG. 8, high wavelength resolution can be obtained by having the control unit 6 narrow the range of the overlapping transmission band of the variable band-pass filters 5 and 7.

In the spectroscopic apparatus of FIG. 8, the plural variable band-pass filters 5 and 7 are operated in cooperation. Thus, the spectroscopic analysis can be performed at high speed with high wavelength resolution on the continuous wavelength band.

The spectroscopic apparatus of FIG. 8 is small and inexpensive and includes fewer components.

In the case of using the light incidence angle tunable type filter having small polarization dependence as the variable band-pass filter 7, a sufficient amount of light can be obtained even from weak light. Therefore, a high-speed spectroscopic apparatus can be realized.

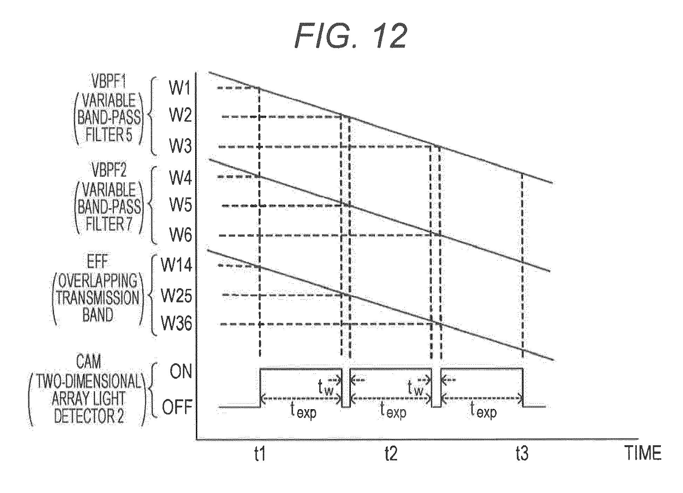

In the above embodiment, the light transmission wavelength band of the variable band-pass filters 5 and 7 is changed stepwise (dispersedly) in a manner of W1→W2→W3 and W4→W5→W6 as illustrated in FIG. 10. However, the light transmission wavelength band may be changed continuously from W1 to W3 and from W4 to W6 as illustrated in FIG. 12.

Specifically, the control unit 6 changes the filter part of the variable band-pass filter 5 for each predetermined angle to constantly maintain the band width of the overlapping transmission band. In this manner, the control unit 6 changes the light transmission wavelength band continuously within the range from W1 to W3. In accordance with this, the control unit 6 changes the filter part of the variable band-pass filter 7 for each predetermined angle to keep the overlapping transmission band at a desired band width. In this manner, the control unit 6 changes the light transmission wavelength band continuously within the range from W4 to W6.

FIG. 12 is another timing chart illustrating the operation of the two-dimensional array light detector 2 and the variable band-pass filters 5 and 7 which are controlled by the control unit 6. In FIG. 12, the control unit 6 continuously changes the filter part of the variable band-pass filters 5 and 7 for every predetermined angle.

In other words, the control unit 6 continuously changes the light transmission wavelength band of the variable band-pass filter 5 within the range from W1 to W3, and moreover changes continuously the light transmission wavelength band of the variable band-pass filter 7 within the range from W4 to W6. Thus, the overlapping transmission band continuously changes within the range from W14 to W36. FIG. 12 depicts the overlapping transmission band which changes continuously and linearly. However, the control unit 6 may change the overlapping transmission band non-linearly.

In the case where the spectrum band of the output light is swept by continuously changing the overlapping transmission band as illustrated in FIG. 12, the acceleration or deceleration of the variable band-pass filters 5 and 7 as illustrated in FIG. 10 is not necessary. Thus, the standby time $T_w$ can be shortened. That is, the photographing with the use of the two-dimensional array light detector 2 can be repeatedly performed. Therefore, the entire light dispersing time becomes shorter and the spectrum can be obtained at higher speed.

The control unit 6 may continuously change the transmission wavelength band of the variable band-pass filters 5 and 7 within the range from W1 to W3 and from W4 to W6 while changing the overlapping transmission bands W14, W25, and W36. For example, as for the range where the light intensity analysis of the transmission light obtained in the narrow wavelength band is conducted, the control unit 6 may control the variable band-pass filters 5 and 7 to narrow the width of the overlapping transmission band as much as possible. Meanwhile, as for the range where the light intensity analysis of the transmission light obtained in the narrow range is not necessary, the control unit 6 may increase the width of the overlapping transmission band.

As a result, the spectroscopic apparatus (control unit 6) can disperse the light with the desired continuous wavelength band at higher wavelength resolution. Furthermore, the spectroscopic apparatus (control unit 6) can perform spectroscopic analysis at high speed while having the minimum necessary wavelength resolution as a whole.

In each of the above embodiments, the lens optical system including the two optical units 3 and 4 is used. The spectroscopic apparatus of the present disclosure, however, is not limited thereto and may include another optical unit.

As illustrated in FIG. 8, for example, the polarizing plate 9 including a half-wave plate or a quarter-wave plate may be installed behind the variable band-pass filter 7. Thus, the output light including the fluorescent light, scattered light, reflected light, and transmitted light from the sample 1 transmitted through the variable band-pass filter 7 can be converted into predetermined polarized light such as linearly polarized light, circularly polarized light, or elliptically polarized light. In this case, the polarizing direction of the polarizing plate 9 (polarizing unit) may be changed (controlled) based on the control signal from the control unit 6.

According to such a spectroscopic apparatus, the light transmitted through the variable band-pass filter 7 is polarized in a predetermined polarizing direction. Thus, the output light from the sample 1 having the polarization dependence can be dispersed (the spectrum of the output light can be obtained).

By the way, in the case where the variable band-pass filters 5 and 7 are the light incidence angle tunable type filters, the displacement of the optical axis (optical axis shift) may be caused in the X-Y plane, which is approximately perpendicular to the optical axis, due to the adjustment of the angle. In this case, the spectroscopic apparatus may have an optical axis adjusting unit. The control unit 6 corrects the displacement of the optical axis (optical axis shift) in the X-Y direction as appropriate by controlling the optical axis adjusting unit.

In other words, the optical axis adjusting unit such as a light transmitting optical plate for adjusting the optical axis may be provided in the optical path from the sample 1 to the two-dimensional array light detector 2. Thus, the displacement of the optical axis (optical axis shift) in the X-Y direction on the plane which is approximately perpendicular to the optical axis of the light emitted from the sample 1 can be corrected. In this case, the optical axis adjusting unit may control the incidence angle of the output light from the sample 1 so as to correct the displacement of the optical axis (optical axis shift) generated in the X-Y direction on the basis of the control signal from the control unit.

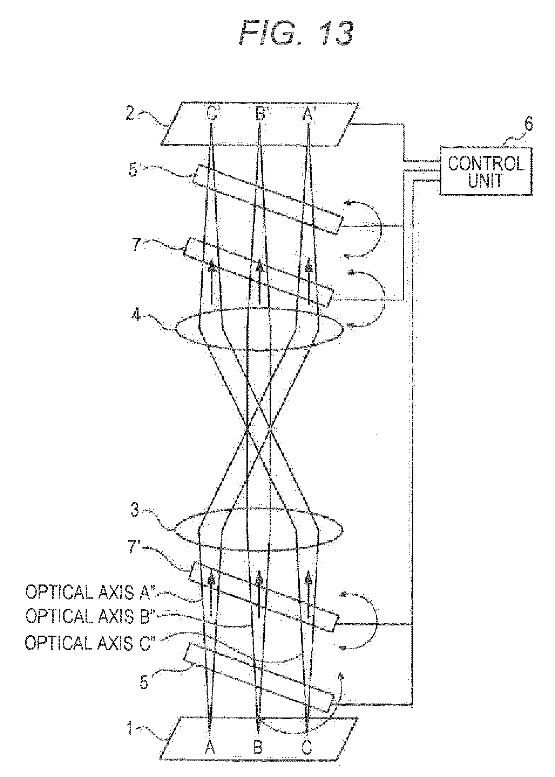

FIG. 13 is a diagram illustrating an embodiment in which an optical axis correcting unit is provided. The parts in FIG. 13 common to those in FIG. 8 are denoted by the same reference symbols. In FIG. 13, the optical axis shift caused by the variable band-pass filters 5 and 7 is corrected by optical axis correcting plates 5' and 7' which are tilted at the same angle.

The optical axis shift caused by the variable band-pass filter 5 disposed between the sample 1 and the optical unit 3 is corrected by the optical axis correcting plate 5' disposed between the optical unit 4 and the two-dimensional array light detector 2. The optical axis correcting plate 5' is tilted at the same angle as the variable band-pass filter 5. The optical axis shift caused by the variable band-pass filter 7 disposed between the optical unit 4 and the two-dimensional array light detector 2 is corrected by the optical axis correcting plate 7' disposed between the sample 1 and the optical unit 3. The optical axis correcting plate 7' is tilted at the same angle as the variable band-pass filter 7. The variable band-pass filter 5 has approximately the same thickness and refractive index as the optical axis correcting plate 5'. The variable band-pass filter 7 has approximately the same thickness and refractive index as the optical axis correcting plate 7'.

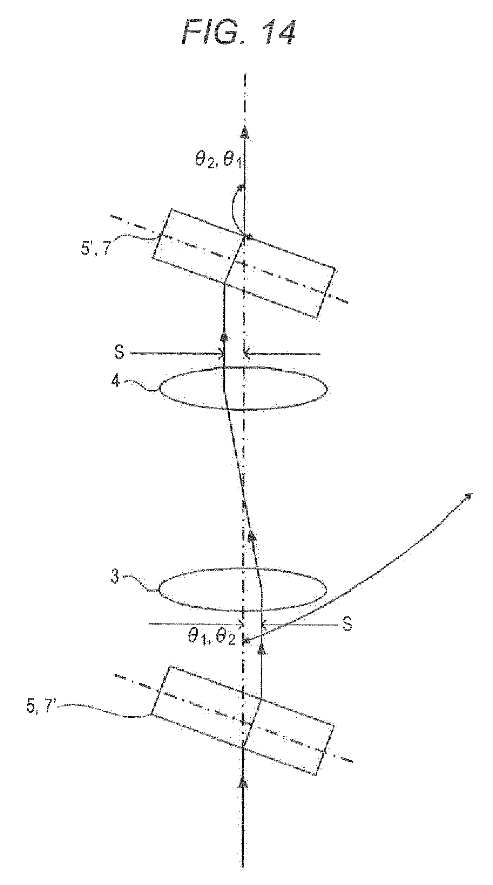

The operation of the correction of the optical axis shift with the use of the optical axis correcting plates 5' and 7' is described with reference to FIG. 14.

FIG. 14 is a diagram illustrating the optical path using the variable band-pass filter 5, the telecentric optical system including the optical units 3 and 4, and the optical axis correcting plate 5' illustrated in FIG. 13. After the light coming from the downward direction in the drawing through the center of the optical axis (a chain line) of the telecentric optical system including the optical units 3 and 4 reaches the variable band-pass filter 5, the light travels while refracting on front and rear surfaces of the filter 5 in accordance with the Snell's law. The optical path of the light transmitted through the filter 5 is approximately parallel to the center of the optical axis. However, the optical axis shift S is caused. Here, the optical axis shift S is expressed as the function of the refractive index, the thickness, and the inclination angle $\theta 1$ relative to the optical axis of the variable band-pass filter 5. The optical axis shifted by the variable band-pass filter 5 intersects with the center of the optical path by passing through the optical unit 3, and travels along the optical path horizontally reversed about the center of the optical axis. After that, the optical axis passes through the optical unit 4. Thus, the optical path becomes approximately parallel to the center of the optical axis.

In other words, the optical axis shift S caused by the variable band-pass filter 5 is maintained even after light has transmitted through the optical unit 4. The light transmitted through the optical unit 4 reaches the optical axis correcting plate 5' through the optical path approximately parallel to the center of the optical axis. The light having reached the optical axis correcting plate 5' travels while refracting on front and rear surfaces of the optical axis correcting plate 5' in accordance with Snell's law. The optical axis correcting plate 5' corrects the optical axis shift by causing the optical axis of the light transmitted through the optical axis correcting plate 5' to be shifted to the same degree as that of the optical axis shift S caused by the variable band-pass filter 5. The condition for achieving this correction is: the thickness and refractive index of the optical axis correcting plate 5' are approximately equal to those of the variable band-pass filter 5, and the inclination angle $\theta 2$ of the optical axis correcting plate 5 relative to the optical axis is approximately equal to $\theta 1$.

The above description similarly applies to the case where the variable band-pass filter 5 is replaced by the optical axis correcting plate 7' and the optical axis correcting plate 5' is replaced by the variable band-pass filter 7. In this case, the optical axis shift is corrected by applying the optical axis shift with the optical axis correcting plate 7' in the direction opposite to the optical axis shift caused by the variable band-pass filter 7. The condition for achieving this correction is: the thickness and refractive index of the optical axis correcting plate 7' are approximately equal to those of the variable band-pass filter 7, and the inclination angle $\theta 2$ of the optical axis correcting plate 7' relative to the optical axis is approximately equal to the angle $\theta 1$ of the variable band-pass filter 7 relative to the optical axis.

As illustrated in FIG. 13, the variable band-pass filter 5 and the optical axis correcting plate 7' are disposed between the sample 1 and the optical unit 3. The positions of the variable band-pass filter 5 and the optical path correcting plate 7' may be opposite in the direction where light travels (the variable band-pass filter 5 may be disposed closer to the optical unit 3 than the optical path correcting plate 7'). In this case, the positions of the variable band-pass filter 7 and the optical axis correcting plate 5' disposed between the optical unit 4 and the two-dimensional array light detector 2 may be opposite in the direction where light travels, in accordance with the positions of the variable band-pass filter 5 and the optical axis correcting plate 7' (the variable band-pass filter 7 may be disposed farther from the optical unit 4 than the optical axis correcting plate 5').

In the embodiment described with reference to FIGS. 13 and 14, the variable band-pass filter 5 (7) and the optical axis correcting plate 5' (7') have approximately the same thickness and refractive index. However, the variable band-pass filter 5 (7) and the optical axis correcting plate 5' (7') may have different thickness and refractive index. In the latter case, the inclination angle $\theta 2$ of the optical axis correcting plate 5' (7') and the inclination angle $\theta 1$ of the variable band-pass filter 5 (7) are different.

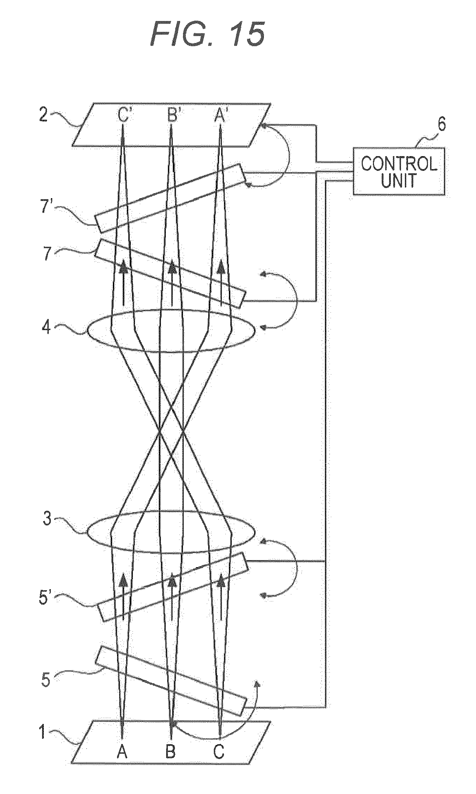

In the above embodiment, the optical axis correcting plate 5' is disposed between the optical unit 4 and the two-dimensional array light detector 2 in order to correct the optical axis shift caused by the variable band-pass filter 5 disposed between the sample 1 and the optical unit 3. However, the present disclosure is not limited thereto and the optical axis correcting plate 5' may be disposed between the sample 1 and the optical unit 3 in order to correct the optical axis shift caused by the variable band-pass filter 5 disposed between the sample 1 and the optical unit 3 as illustrated in FIG. 15. Additionally, the optical axis correcting plate 7' may be disposed between the optical unit 4 and the two-dimensional array light detector 2 in order to correct the optical axis shift caused by the variable band-pass filter 7 disposed between the optical unit 4 and the two-dimensional array light detector 2.

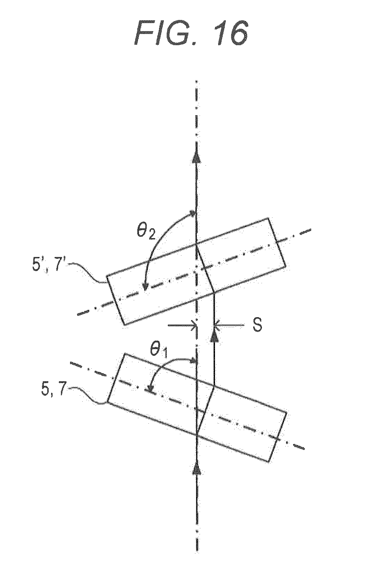

FIG. 16 is a diagram provided for describing the optical path using the variable band-pass filter 5 (7) and the optical axis correcting plate 5' (7') illustrated in FIG. 15. The optical axis shift S caused by the variable band-pass filter 5 (7) is corrected by the optical axis correcting plate 5' (7') disposed just behind the variable band-pass filter 5 (7). In this structure, the variable band-pass filter 5 (7) and the optical axis correcting plate 5' (7') are disposed to satisfy the following equation:

$$\theta 2 = 180° - \theta 1$$

The equation represents the relationship between the inclination angle θ1 of the variable band-pass filter 5 (7) relative to the optical axis and the inclination angle θ2 of the variable band-pass filter 5' (7') relative to the optical axis.

Note that in this embodiment illustrated in FIG. 15, the optical axis correcting plates 5' and 7' are sequentially disposed behind the variable band-pass filters 5 and 7 along the traveling route of the light. However, the present disclosure is not limited thereto and the optical axis correcting plates 5' and 7' may be disposed in front of the variable band-pass filters 5 and 7.

By the use of the optical axis correcting plates as above, light from the planar region to be observed with a microscope can be dispersed while the optical axis shift is corrected. In other words, it is not necessary to conduct the analysis considering the optical axis shift after the spectroscopic measurement. As a result, the spectroscopic analysis can be conducted easily in a short time.

Although the above embodiment has described the example in which the optical system is a microscope, another optical system such as a telescope is also applicable in the present disclosure.

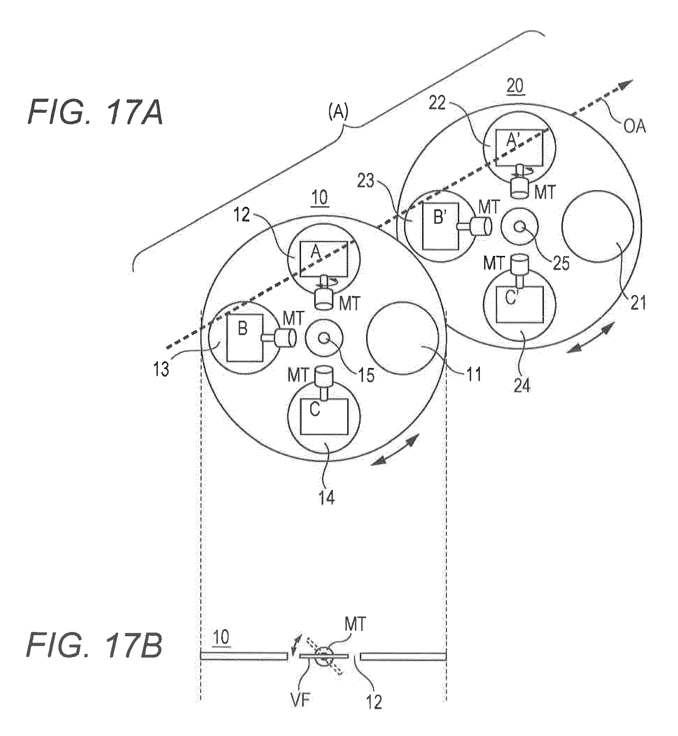

FIGS. 17A and 17B are structure diagrams of a spectroscopic apparatus according to another embodiment of the present disclosure. In the spectroscopic apparatus illustrated in FIGS. 17A and 17B, the dispersible wavelength band is wider than that of the spectroscopic apparatus illustrated in FIG. 8. FIG. 17A is a simplified perspective view and FIG. 17B is a partial sectional view of FIG. 17A. Filter wheels 10 and 20 are used as supporting members for the variable band-pass filter (hereinafter may be referred to as a filter). The filter wheels (supporting members) 10 and 20 are disposed along the optical axis OA at the positions of the variable band-pass filters 5 and 7 in the spectroscopic apparatus of FIG. 8.

The filter wheels 10 and 20 are each provided with four filter attachment portions 11 to 14 and 21 to 24, respectively at intervals of approximately 90° along the circumferential direction. The number of filter attachment portions is not limited to four and may be more than or less than four depending on the design.

The approximately central position of the filter wheels 10 and 20 is provided with motors 15 and 25 for rotating and driving the filter wheels 10 and 20 in conjunction. The control unit 6 can sequentially change the filter attachment portions 11 to 14 and 21 to 24 intersecting with the optical axis OA by rotating and driving the filter wheels 10 and 20 with the motors 15 and 25.

Note that the filter attachment portions 11 and 21 among the four filter attachment portions 11 to 14 and the four filter attachment portions 21 to 24 serve as blanks free from the filters. The remaining three filter attachment portions 12 to 14 and three filter attachment portions 22 to 24 are provided with filters A to C and A' to C', respectively. The filters A to C and A' to C' have approximately the same structure and have different transmission wavelength bands from each other. The filter attachment portions 11 and 21 serving as the blanks effectively function when the light dispersion is not necessary or for adjusting the optical axis.

The filters A to C and A' to C' provided for the filter attachment portions 12 to 14 and 22 to 24 of the filter wheels 10 and 20 are provided with tilting motors MTs. By rotating these motors MTs, the angle of the filter can be changed relative to the optical axis OA penetrating through the approximately central part of the filters A to C and A' to C'. In other words, the filter wheels 10 and 20 can change the filters A to C and A' to C' and rotatably support the filters A to C and A' to C' relative to the optical axis OA.

Specifically, by driving the motors 15 and 25, the filter wheels 10 and 20 are rotated. Thus, the filter attachment portions 12 and 22, the filter attachment portions 13 and 23, and the filter attachment portions 14 and 24 of the filter wheels 10 and 20 are rotated and fixed with each serving as a pair.

In other words, in the example of FIG. 17, first, the filter attachment portions 12 and 22 (filters A and A') are combined by driving the motors 15 and 25 to rotate the filter wheels 10 and 20. Thus, the control unit 6 disposes the filter attachment portions 12 and 22 on the optical axis OA. Then, the control unit 6 performs the surface light dispersion operation by driving the motor MT in a manner similar to the embodiment of FIG. 8 in which the variable band-pass filters 5 and 7 are provided.

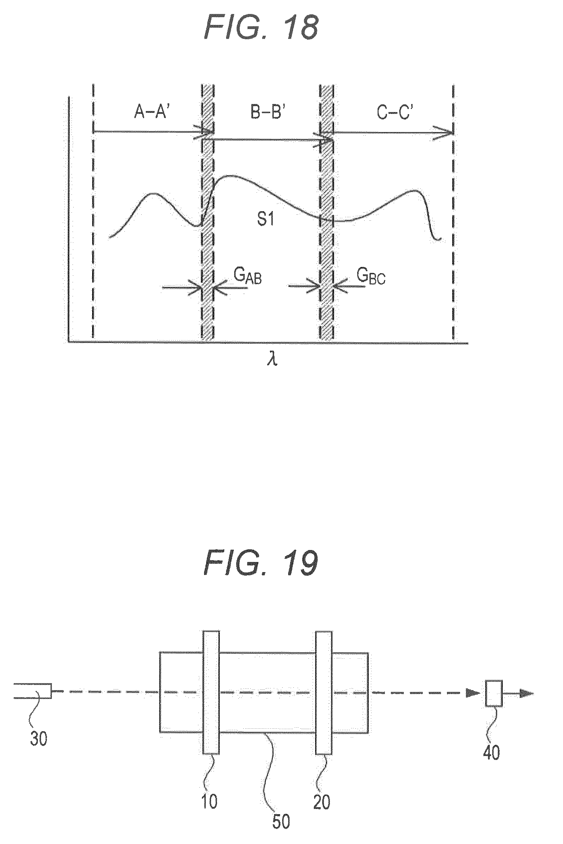

It is assumed that the light is dispersed into spectrum with a characteristic curve S1 as illustrated in FIG. 18. In the case where the filters A and A' are disposed on the optical axis OA, the wavelength region denoted by A-A' of the spectrum curve S 1 is dispersed.

Next, the control unit 6 drives the motors 15 and 25 to rotate the filter wheels 10 and 20, thereby combining the filter attachment portions 13 and 23 (filters B and B') and disposing the filter attachment portions 13 and 23 on the optical axis OA. Moreover, the control unit 6 rotates the motor MT and performs the surface light dispersion operation. In this case, the wavelength region denoted by B-B' of the spectrum curve S1 is dispersed.

Furthermore, the control unit 6 drives the motors 15 and 25 to rotate the filter wheels 10 and 20, thereby combining the filter attachment portions 14 and 24 (filters C and C') and disposing the filter attachment portions 14 and 24 on the optical axis OA. Moreover, the control unit 6 rotates the motor MT and performs the surface light dispersion operation. In this case, the wavelength region denoted by C-C' of the spectrum curve S1 is dispersed.

On this occasion, the control unit 6 may measure with the boundary portion between the adjacent wavelength regions overlapping with each other. In other words, the wavelength regions A-A', B-B', and C-C' may be set to form two overlapping regions: an overlapping region (wavelength region $G_{AB}$) between the adjacent wavelength regions A-A' and B-B'; and an overlapping region (wavelength region $G_{BC}$) between the adjacent wavelength regions B-B' and C-C' are formed. This makes it possible to obtain the information of the continuous spectrum curve S1 later.

For smoothly connecting the characteristics of these plural filters, the relation between the wavelength and the light quantity thereof may be corrected before the measurement.

FIG. 19 is a block diagram illustrating a specific example of a correcting device used for such correction. In FIG. 19, a broad-band light source 30 has a light signal output characteristic having a wavelength and a level which are stable over a broad-band wavelength region. A light receiver 40 has a photoelectric conversion characteristic which is flat over a broad-band wavelength region. In FIG. 19, the entire optical system illustrated in FIG. 17 is illustrated as a spectroscopic optical system 50.

With the broad-band light source 30 and the light receiver 40 as above, the filter is corrected. Thus, the difference of the incidence angle and the wavelength characteristic due to the variation in thickness and/or refractive index, for example, peculiar to the filter can be generally corrected.

The spectroscopic apparatus of FIG. 17 may have a mechanism for changing the combination of the filters capable of dispersing the different wavelength regions like the filter wheels 10 and 20. This makes it possible to perform the surface light dispersion with respect to the wide wavelength band conveniently and quickly.

In the use wavelength band, the wavelength bands to be measured separately may be overlapped on each other. Further, all the filters used at the same time may be corrected over the entire wavelength band to be used before the measurement. This makes it possible to perform the surface light dispersion of the continuous wavelength band.

The mechanism for combining the variable band-pass filters as above facilitates the surface light dispersion of the wide wavelength band.

Alternatively, the surface light dispersion may be performed by preparing a plurality of surface spectroscopic apparatus with different dispersion wavelength bands and exchanging the device for every measurement.

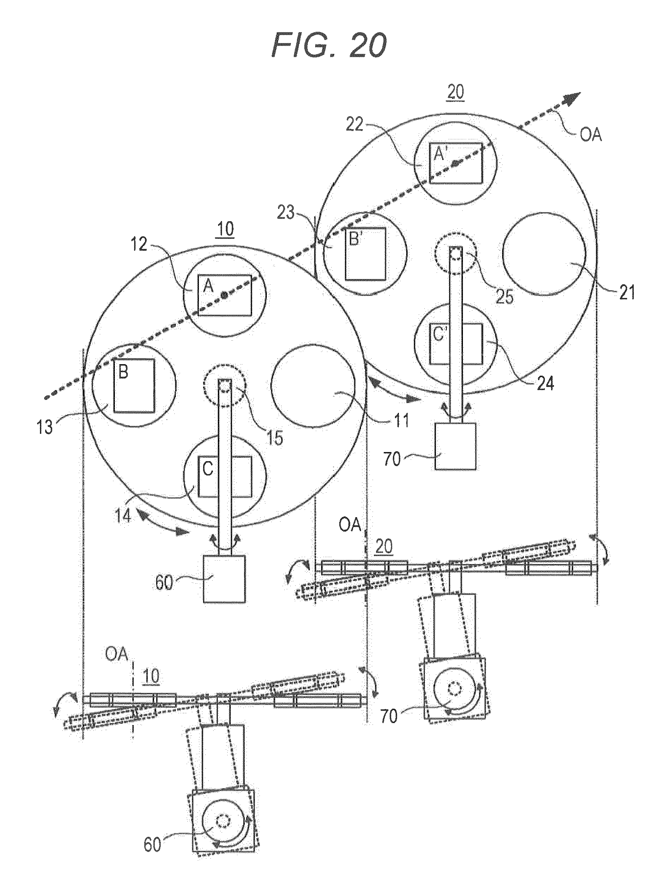

FIG. 20 is a structure diagram illustrating the spectroscopic apparatus according to another embodiment of the present disclosure. The parts in FIG. 20 common to those in FIG. 17 are denoted by the same reference symbols. Here, the filters A, B, C, A', B', and C' are directly fixed (attached) to the filter wheels 10 and 20 not via the motor MT. In FIG. 20, the filter wheels 10 and 20 are provided with motors 60 and 70 (rotors) in addition to the mechanism illustrated in FIG. 17. The motors 60 and 70 tilt the entire filter wheels 10 and 20 at any angle relative to the optical axis OA, respectively. In other words, the motor 60 (70) rotate the entire filter wheel 10 (20) relative to the optical axis OA.

This makes it possible for the motors 60 and 70 to change the angle of the filter relative to the optical axis OA. Thus, the transmission wavelength band of the filter can be changed.

The spectroscopic apparatus illustrated in FIG. 20 can change the combination of the filters attached to the filter attachment portions 12 to 14 and 22 to 24 disposed on the optical axis by driving the motors 15 and 25 to rotate the filter wheels 10 and 20, in a manner similar to the spectroscopic apparatus of FIG. 17. Thus, this spectroscopic apparatus can disperse the light with a wide wavelength band.

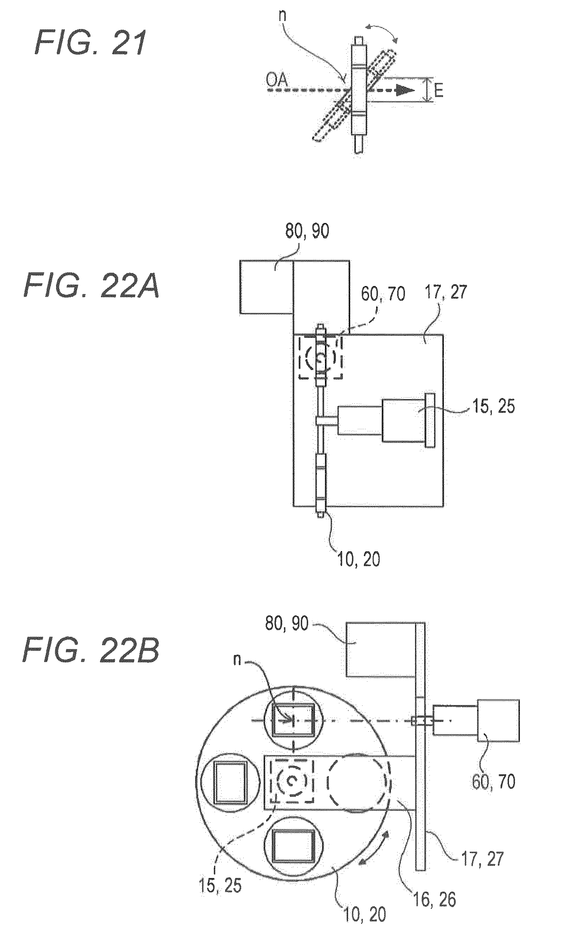

Note that in the spectroscopic apparatus of FIG. 20, the filter is rotated about the center n of the field of vision of the filter relative to the optical axis OA as illustrated in FIG. 21, for example. This can suppress the reduction of the field of vision E.

FIGS. 22A and 22B are structure diagrams of a rotation mechanism for achieving the rotation operation of the filter illustrated in FIG. 21. FIG. 22A is a side view and FIG. 22B is a plan view. The motors 15 and 25 rotate and drive the filter wheels 10 and 20. The motors 15 and 25 are attached to supporting substrates 17 and 27 with supporting pieces 16 and 26 interposed therebetween.

The control unit 6 causes the motors 60 and 70 to rotate the supporting substrates 17 and 27 supporting the motors 15 and 25. Thus, the control unit 6 can change the angles of the filters attached to the filter attachment portions 12 to 14 and 22 to 24 of the filter wheels 10 and 20.

The rotation axes of the motors 60 and 70 are approximately the same as the center n of the field of vision of the filter. Thus, the reduction of the field of vision E can be suppressed as described with reference to FIGS. 20 and 21.

Counter weights 80 and 90 are attached at positions on the supporting substrates 17 and 27 opposite to the filter wheels 10 and 20 with the rotation axis of the motors 60 and 70 serving as the center. The counter weights 80 and 90 eliminate the effect of the weight of the motors 60 and 70 on the rotation axis.

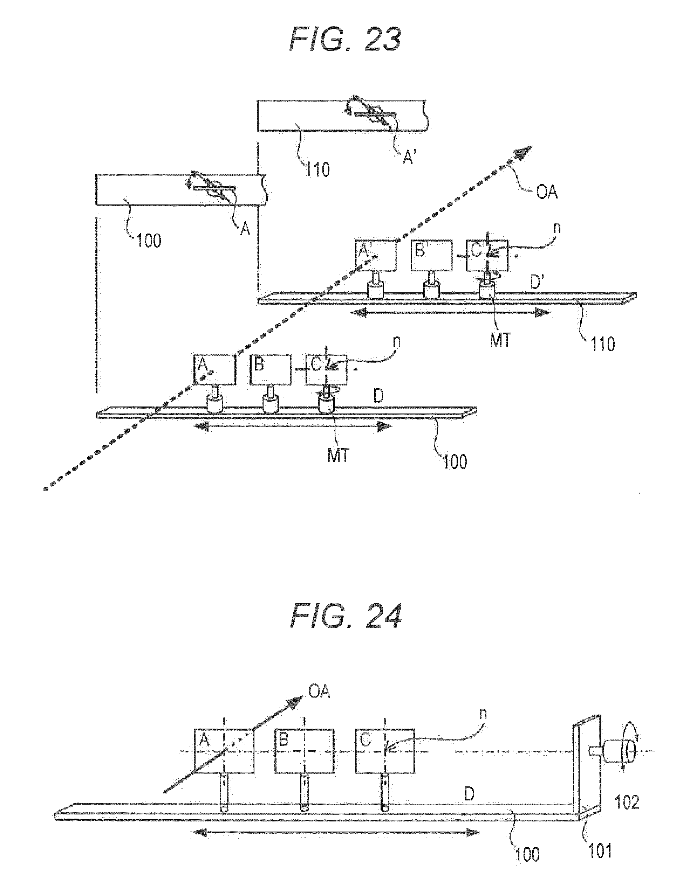

FIG. 23 is a structure diagram illustrating a spectroscopic apparatus according to another embodiment of the present disclosure. The parts in FIG. 23 common to those in FIG. 17 are denoted by the same reference symbols. In the spectroscopic apparatus of FIG. 23, sliders 100 and 110 are provided as the supporting members for the filter instead of the filter wheels 10 and 20 of FIG. 17.

The slider 100 is provided with the filters A to C approximately linearly at predetermined intervals. The slider 110 is provided with the filters A' to C' approximately linearly at approximately the same intervals as the filters A to C.

The control unit 6 approximately linearly moves these sliders 100 and 110 relative to the optical axis OA in conjunction. Thus, the control unit 6 can use the filters A to C and the filters A' to C' while changing the filters. In other words, the sliders 100 and 110 can move along a straight line intersecting with the optical axis OA, and can change the plural filters A to C and the filters A' to C' and rotatably support the filters A to C and the filters A' to C' relative to the optical axis OA.

In a manner similar to the above, the control unit 6 rotates the motors MT provided for the filters A to C and the filters A' to C'. Thus, the control unit 6 can change the angles of the filters A to C and the filters A' to C' relative to the optical axis OA penetrating through the approximately central part thereof.

The control unit 6 changes the combination of the filters A-A', B-B', and C-C' used in a manner similar to the spectroscopic apparatus of FIG. 17 for the dispersion of the light with a wide wavelength band. In this case, the slider 100 (110) is also provided with a blank D (D').

FIG. 24 is a structure diagram illustrating a spectroscopic apparatus according to another embodiment of the present disclosure. The parts in FIG. 24 common to those in FIG. 23 are denoted by the same reference symbols. The spectroscopic apparatus of FIG. 24 has the filters A to C attached to the slider 100 approximately linearly at predetermined intervals. These filters A to C are not provided with the motors MTs. The spectroscopic apparatus of FIG. 24 has the filters A' to C' attached approximately linearly at predetermined intervals in the slider 110 (not shown in FIG. 24 but shown in FIG. 23). These filters A' to C' are not provided with the motors MTs.

In FIG. 24, an end of the slider 100 has a supporting piece 101 fixed thereto approximately perpendicular to the attachment surface of the filters A to C. The supporting piece 101 is provided with a motor 102. The motor 102 (rotor) rotates (rotates and drives) the entire slider 100 relative to the optical axis OA, thereby changing the angles of the filters A to C relative to the optical axis OA.

The motor 102 is fixed to the supporting piece 101 so that the center of the rotation, which is the longitudinal direction of the slider 100, and the center n of the optical axis substantially coincide with each other. Thus, the reduction of the field of vision E can be suppressed.

According to the spectroscopic apparatus of FIG. 24, the number of motors can be reduced as compared with the spectroscopic apparatus of FIG. 23. As a result, the cost reduction can be achieved.

The important point in the present disclosure lies in the fact that the transmission wavelength band of the variable band-pass filter changes when the variable band-pass filter is inclined (tilted) by a predetermined angle. Also, another important point in the present disclosure lies in the fact that the amount of change of the transmission wavelength band satisfies a predetermined specification when the optical system is formed. It is therefore not essential whether the optical path of the light transmitting through the variable band-pass filter is parallel light or not.

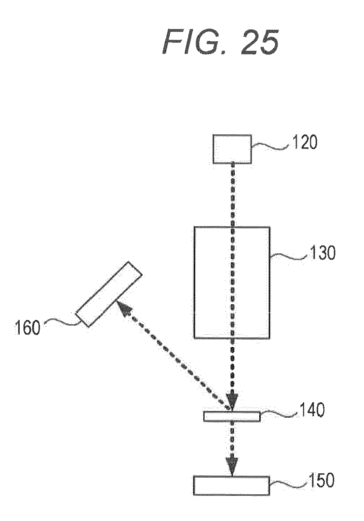

Moreover, the above embodiment has described the spectroscopic apparatus for performing the surface light dispersion. The output light of the spectroscopic apparatus is the dispersed narrow-band light. Thus, as illustrated in FIG. 25, the output light from the spectroscopic apparatus can be used as the narrow-band light source substantially.

In FIG. 25, the output light from the broad-band light source 120 enters a spectroscopic optical system 130 based on the present disclosure and is dispersed thereby. The output light dispersed by the spectroscopic optical system 130 is delivered to a sample 140. The light transmitted through the sample 140 is received by a first light receiver 150 and is converted into an electric signal. The light reflected on the sample 140 or the fluorescent light generated by excitation of the sample 140 is received by a second light receiver 160, and is converted into an electric signal.

In other words, the spectroscopic optical system 130 based on the present disclosure functions as the substantial narrow-band light source for irradiating the sample 140 with light. The first and second light receivers 150 and 160 may employ any of a point light reception, linear light reception, or planar light reception.

The spectrometer (spectroscopic apparatus) according to the present disclosure can be coupled with a general optical device such as a microscope or a telescope. For example, in the optical system of FIG. 8, when the sample 1 is installed so as to be an image plane of a camera as a general optical device or an intermediate image plane of an objective lens, the entire optical system of FIG. 8 can function as a camera having a spectroscopic function. The spectrometer and the optical device (microscope) may be connected to each other with a versatile connector such as a C-mount. Similarly, the spectrometer and the microscope may be integrated as a spectroscopic microscope. In the spectroscopic apparatus of FIG. 1, in the case of obtaining only the output light with a certain particular wavelength from the surface of the sample 1, dispersion can be performed with no unevenness in the light transmission wavelength band regardless of the position or region on the surface of the sample 1 as illustrated in FIG. 3. In the spectroscopic apparatus of FIG. 1, the wavelength band width of the light transmission of the variable band-pass filter 5 corresponds to the wavelength resolution; therefore, by using the variable band-pass filter 5 with a narrow wavelength band width and changing the band width into a number of wavelength band widths for transmitting light, the light can be dispersed into continuous spectrum bands at high wavelength resolution. As for FIG. 14, the optical axis shift may be corrected by shifting the optical axis with the optical axis correcting plate 7' in advance in a direction opposite to the optical axis shift caused by the variable band-pass filter 7. In the structure of FIG. 20, the counter weights 80 and 90 may be attached for balancing the weight acting on the rotation axes of the motors 60 and 70 at positions on the supporting substrates 17 and 27 opposite to the filter wheels 10 and 20 around the rotation axes of the motors 60 and 70. The spectroscopic apparatus or the spectroscopic light source according to the present disclosure may be any of the following first to twelfth spectroscopic apparatus or the following first spectroscopic light source.

A first spectroscopic apparatus is a spectroscopic apparatus for performing spectroscopic analysis by delivering through an optical system, output light including fluorescent light, scattered light, reflected light, or transmitted light generated from a sample to a two-dimensional array light detector in accordance with irradiation light delivered from a light source to the sample, the spectroscopic apparatus including: a first optical unit disposed between the sample and the two-dimensional array light detector; a second optical unit disposed between the two-dimensional array light detector and the first optical device; a variable band-pass filter unit disposed in at least one of spaces between the first optical unit and the sample and between the second optical unit and the two-dimensional array light detector; and a control unit for controlling while synchronizing a photographing timing of the two-dimensional array light detector and change of a light transmission wavelength band of the variable band pass filter unit.

A second spectroscopic apparatus is the first spectroscopic apparatus wherein the control unit controls the variable band-pass filter unit to sweep a predetermined plurality of the transmission wavelength bands.

A third spectroscopic apparatus is the first or second spectroscopic apparatus wherein the control unit photographs the output light at predetermined time intervals by controlling the photographing timing of the two-dimensional array light detector and the control unit controls the variable band-pass filter unit to change the transmission wavelength band at predetermined wavelength band intervals.

A fourth spectroscopic apparatus is any of the first to third spectroscopic apparatus further including a polarizing unit for polarizing the output light including fluorescent light, scattered light, reflected light, and transmitted light generated from the sample and transmitted through the variable band-pass filter in a predetermined polarizing direction, wherein the control unit changes the polarizing direction of the polarizing unit.

A fifth spectroscopic apparatus is any of the first to fourth spectroscopic apparatus further including an optical axis adjusting unit for correcting displacement of an optical axis of the output light including fluorescent light, scattered light, reflected light, and transmitted light generated from the sample in a two-dimensional plane.

A sixth spectroscopic apparatus is any of the first to fifth spectroscopic apparatus wherein at least one supporting member is provided along the optical axis, and the supporting member can change the variable band-pass filters with different transmission wavelength bands and is rotatably supported relative to the optical axis.

A seventh spectroscopic apparatus is the sixth spectroscopic apparatus wherein the supporting member is a rotatably formed circular-plate-like filter wheel and the filter wheel is attached so that the at least one variable band-pass filter intersects with the optical axis at a predetermined rotation position.

An eighth spectroscopic apparatus is the sixth spectroscopic apparatus wherein the supporting member is a slider that can move in a straight direction intersecting with the optical axis.

A ninth spectroscopic apparatus is the sixth spectroscopic apparatus further including a rotating unit for rotating the entire supporting member relative to the optical axis.

A tenth spectroscopic apparatus is any of the first to fifth spectroscopic apparatus wherein the optical system can be coupled with, or is integrated with an optical system such as a microscope or a telescope.

An eleventh spectroscopic apparatus is any of the first to sixth spectroscopic apparatus wherein the variable band-pass filter is formed so that the transmission wavelength band changes depending on an incidence angle to the optical axis.

A twelfth spectroscopic apparatus is any of the first to eleventh spectroscopic apparatus wherein the first optical unit and the second optical unit constitute a telecentric optical system.

A first spectroscopic light source includes: a light source for outputting irradiation light for irradiating a sample; a two-dimensional array light detecting unit to which the output light including fluorescent light, scattered light, reflected light, and transmitted light is delivered through an optical system by the irradiation of the output light from the light source; a first optical unit disposed between the sample and the light source; a second optical unit disposed between the first optical unit and the light source; a variable band-pass filter unit disposed in at least one of spaces between the first optical unit and the sample 1 and between the second optical unit and the light source; and a control unit for controlling while synchronizing a photographing timing of the two-dimensional array light detector and change of a light transmission wavelength band of the variable band-pass filter unit.

According to these first to twelfth spectroscopic apparatus, the spectroscopic output with unevenness of light spectrum intensity reduced can be obtained in a wider wavelength range in a surface area to be observed. Moreover, the first spectroscopic light source can also be used as a substantial narrow-band light source in the case of irradiating a sample.

The foregoing detailed description has been presented for the purposes of illustration and description. Many modifications and variations are possible in light of the above teaching. It is not intended to be exhaustive or to limit the subject matter described herein to the precise form disclosed. Although the subject matter has been described in language specific to structural features and/or methodological acts, it is to be understood that the subject matter defined in the appended claims is not necessarily limited to the specific features or acts described above. Rather, the specific features and acts described above are disclosed as example forms of implementing the claims appended hereto.

## Claims

1. A spectroscopic apparatus comprising:

   an optical system configured to transmit output light from a sample (1) irradiated with irradiation light from a light source (OS);
   a two-dimensional array light detector (2) configured to photograph light transmitted through the optical system; and
   a control unit (6), wherein
   the optical system includes:

   a first optical device (3) disposed between the sample and the two-dimensional array light detector;
   a second optical device (4) disposed between the two-dimensional array light detector and the first optical device; and
   a variable band-pass filter (5, 7) disposed in at least one of spaces between the first optical device and the sample and between the second optical device and the two-dimensional array light detector, and

   the control unit changes a light transmission wavelength band of the variable band-pass filter in accordance with a photographing timing of the two-dimensional array light detector.

2. The spectroscopic apparatus according to claim 1, wherein
   the control unit controls the variable band-pass filter to sweep a predetermined plurality of the transmission wavelength bands.

3. The spectroscopic apparatus according to claim 1 or 2, wherein
   the control unit photographs the output light at predetermined time intervals by controlling the photographing timing of the two-dimensional array light detector, and
   the control unit controls the variable band-pass filter to change the transmission wavelength band into a wavelength band having predetermined intervals.

4. The spectroscopic apparatus according to any one of claims 1 to 3, further comprising a polarizer (9) configured to polarize light transmitted through the variable band-pass filter in a predetermined polarizing direction, wherein
   the control unit changes the polarizing direction of the polarizer.

5. The spectroscopic apparatus according to any one of claims 1 to 4, further comprising an optical axis adjusting device (5', 7') configured to correct displacement of an optical axis of the output light from the sample in a two-dimensional plane.

6. The spectroscopic apparatus according to any one of claims 1 to 5, wherein
   the variable band-pass filter includes a plurality of filters (A-C, A'-C') having different transmission wavelength bands, and
   a supporting member that can change the filters and that rotatably supports the filters relative to the optical axis is further provided.

7. The spectroscopic apparatus according to claim 6, wherein
   the support member is a rotatably formed circular-plate-like filter wheel (10, 20), and
   the filter is supported by the filter wheel and intersects with the optical axis at a predetermined rotation position.

8. The spectroscopic apparatus according to claim 6, wherein
   the support member is a slider (100, 110) that is movable along a straight line intersecting with the optical axis.

9. The spectroscopic apparatus according to claim 6, further comprising a rotor (60, 70, 102) configured to rotate the entire supporting member relative to the optical axis.

10. The spectroscopic apparatus according to any one of claims 1 to 5, wherein the optical system can be coupled with, or is integrated with an optical system such as a microscope or a telescope.

11. The spectroscopic apparatus according to any one of claims 1 to 6, wherein the variable band-pass filter is formed to change the transmission wavelength band depending on an incidence angle to the optical axis.

12. The spectroscopic apparatus according to any one of claims 1 to 11, wherein the first optical device and the second optical device constitute a telecentric optical system.

13. A spectroscopic light source comprising the spectroscopic apparatus according to any one of claims 1 to 12, and a light source (OS) configured to irradiate the sample with light.

# FIG. 1

# FIG. 2

OPTICAL AXIS C"
OPTICAL AXIS B"
OPTICAL AXIS A"

α    β    γ    5

$(\alpha = \beta = \gamma)$

# FIG. 3

LIGHT TRANSMISSION INTENSITY

A→A'   B→B'   C→C'
α      β      γ

$(\alpha = \beta = \gamma)$

WAVELENGTH

*FIG. 4*

*FIG. 5*

# FIG. 6

START OF MEASUREMENT

SET EXPOSURE TIME: texp OF
TWO-DIMENSIONAL ARRAY
LIGHT DETECTOR — S1

SET INITIAL VALUE OF
WAVELENGTH BAND TO BE
DISPERSED, START OPERATION,
AND FINISH OPERATION — S2
VBPF: Wn, n = 1

PHOTOGRAPH WITH
TWO-DIMENSIONAL ARRAY
LIGHT DETECTOR — S3
CAM: ON

ARE MEASUREMENTS
OF ALL WAVELENGTH BANDS
FINISHED? — S4

NO

CHANGE SETTING OF
WAVELENGTH BAND TO BE
DISPERSED AND — S5
START OPERATION
VBPF: Wn, n = n + 1

YES

IS WAVELENGTH
BAND SET TO SPECIFIED
ONE? — S6

NO

YES

END OF MEASUREMENT

# FIG. 7

# FIG. 8

OPTICAL AXIS A"

OPTICAL AXIS B"

OPTICAL AXIS C"

CONTROL
UNIT

## FIG. 9

## FIG. 10

## FIG. 11

```
        ( START OF MEASUREMENT )
                    │
                    ▼
    ┌───────────────────────────────┐
    │  SET EXPOSURE TIME: texp OF    │  ⟋S1
    │    TWO-DIMENSIONAL ARRAY       │
    │        LIGHT DETECTOR          │
    └───────────────────────────────┘
                    │
                    ▼
    ┌───────────────────────────────┐
    │      SET INITIAL VALUE OF      │
    │    WAVELENGTH BAND TO BE       │
    │  DISPERSED, START OPERATION,   │  ⟋S2
    │      AND FINISH OPERATION      │
    │        VBPF1: Wn, n = 1        │
    │        VBPF2: Wm, n = 4        │
    │           EFF: Wn, m           │
    └───────────────────────────────┘
                    │
                    ▼
    ┌───────────────────────────────┐
    │       PHOTOGRAPH WITH          │  ⟋S3
    │    TWO-DIMENSIONAL ARRAY       │
    │        LIGHT DETECTOR          │
    │          CAM: ON               │
    └───────────────────────────────┘
                    │
                    ▼               S4
              ◇ ARE MEASUREMENTS ◇        NO
              OF ALL WAVELENGTH BANDS ──────────►
                    FINISHED?
                   n = 3?, m = 6?
                    │ YES
```

CHANGE SETTING OF
WAVELENGTH BAND TO BE
DISPERSED AND
START OPERATION  ⟋S5
VBPF1: Wn, n → n + 1
VBPF2: Wm, m → m + 1
EFF: Wn + 1, m + 1

```
              ◇ IS WAVELENGTH ◇     S6
    NO ─────  BAND SET TO SPECIFIED
                    ONE?
                    │ YES
```

( END OF MEASUREMENT )

FIG. 12

# FIG. 13

OPTICAL AXIS A"
OPTICAL AXIS B"
OPTICAL AXIS C"

CONTROL UNIT

# FIG. 14

$\theta_2, \theta_1$

5', 7

S

4

3

$\theta_1, \theta_2$

S

5, 7'

EP 2 730 901 A2

# FIG. 15

28

EP 2 730 901 A2

FIG. 16

29

*FIG. 17A*

(A)

20

22

A'

MT

OA

23

10

12

B'

MT

25

A

MT

21

MT

C'

13

B

MT

24

MT

15

C

11

14

*FIG. 17B*

MT

10

VF

12

EP 2 730 901 A2

# FIG. 18

# FIG. 19

31

## FIG. 20

FIG. 21

FIG. 22A

80, 90

60, 70    17, 27

15, 25

10, 20

FIG. 22B

80, 90

n

60, 70

17, 27

15, 25

16, 26

10, 20

# FIG. 23

# FIG. 24

# FIG. 25

EP 2 730 901 A2

# FIG. 26

2

C'    B'    A'

4

5

3

OPTICAL AXIS A"
OPTICAL AXIS B"
OPTICAL AXIS C"

1

A    B    C

OS

36

## FIG. 27

$$\alpha \neq \beta \neq \gamma$$

## FIG. 28

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2012246429 A
- JP 2002014043 A
- JP 2007179002 A
- JP 2004317676 A
- JP 2011220700 A
- JP 2012127855 A